# EUROPÄISCHE PATENTSCHRIFT

(11) **EP 2 036 051 B1**
(45) Veröffentlichungstag und Bekanntmachung des Hinweises auf die Patenterteilung: **12.05.2010**
(21) Anmeldenummer: 07726122.0
(22) Anmeldetag: 21.06.2007
(51) Int. Cl.: G07D 11/00, B65H 1/26, B65H 1/28

(54) **BEARBEITUNGSVORRICHTUNG FÜR WERTDOKUMENTE**
PROCESSING DEVICE FOR VALUE DOCUMENTS
SYSTÈME DE TRAITEMENT DE DOCUMENTS DE VALEUR

(30) Priorität: 22.06.2006 DE 102006028633
(43) Veröffentlichungstag der Anmeldung: 18.03.2009
(73) Patentinhaber: Giesecke & Devrient GmbH, 81677 München (DE)
(72) Erfinder: STAPFER, Michael, 85579 Neubiberg (DE); LINCK, Ralf, 81375 München (DE)
(86) Internationale Anmeldenummer: PCT/EP2007/005494
(87) Internationale Veröffentlichungsnummer: WO 2007/147607

(56) Entgegenhaltungen:
- WO-A-2006/056599
- US-A- 5 411 249
- US-A1- 2002 060 400
- US-A1- 2005 127 590

## Beschreibung

Die vorliegende Erfindung betrifft eine Bearbeitungsvorrichtung für Wertdokumente und insbesondere eine solche Bearbeitungsvorrichtung mit einer Prüfungseinrichtung zur Erfassung wenigstens einer Eigenschaft der Wertdokumente, einem Zwischenspeicher für Wertdokumente und einem Endspeicherbereich für Sicherheitsbehälter zur Speicherung von Wertdokumenten.

Unter Wertdokumenten werden dabei und im Folgenden blattförmige Gegenstände verstanden, die beispielsweise einen monetären Wert oder eine Berechtigung repräsentieren und daher nicht beliebig durch Unbefugte herstellbar sein sollen. Sie weisen daher nicht einfach zu reproduzierende Eigenschaften, insbesondere Merkmale, auf, deren Vorhandsein ein Indiz für die Echtheit, d.h. die Herstellung durch eine dazu befugten Stelle, ist. Wichtige Beispiele für solche Wertdokumente sind Coupons, Gutscheine, Schecks und insbesondere Banknoten.

Bearbeitungsvorrichtungen der oben genannten Art sind grundsätzlich bekannt. Eine solche Bearbeitungsvorrichtung kann beispielsweise dazu dienen, daß Bedienpersonal, beispielsweise Kassierer oder Kassiererinnen, Banknoten in einen Sicherheitsbehälter einzahlen kann, dem es keine eingezahlten Banknoten entnehmen kann. Beispielsweise kann eine Bedienperson mittels der Bearbeitungsvorrichtung einen Stapel von Banknoten automatisch auf Echtheit prüfen, die Anzahl und Denomination der Banknoten feststellen und als echt erkannte Banknoten in die Sicherheitsbehälter in dem Endspeicherbereich transportieren. Diese Sicherheitsbehälter können dann von Werttransportunternehmen aus der Vorrichtung entfernt und zu einer Bank transportiert werden. Dabei kann beispielsweise der Wert der Banknoten automatisch ermittelt und der Bedienperson angezeigt werden. Darüber hinaus kann der entsprechende Betrag der Bedienperson oder einem Unternehmen, das die Bedienperson beschäftigt, gutgeschrieben werden.

Treten Unstimmigkeiten zwischen dem bei der Einzahlung festgestellten Wert der Banknoten und dem nach Meinung der Bedienperson vorliegenden Wert der Banknoten auf, ist es sinnvoll, daß die Bedienperson den Einzahlvorgang, d.h. den Transport in den Sicherheitsbehälter, abbrechen kann, um die Einzahlung der Banknoten nochmals zu überprüfen. Hierzu ist der Zwischenspeicher vorgesehen, in dem alle als echt erkannten Banknoten bei einer Einzahlung vor dem Transport in die Sicherheitsbehälter zwischengespeichert werden können. Tritt nach Ermittlung des Wertes aller in dem Zwischenspeicher zwischengespeicherten Banknoten und Mitteilung an die Bedienperson eine Diskrepanz auf, kann diese die Einzahlung abbrechen, woraufhin alle in dem Zwischenspeicher zwischengespeicherten Banknoten wieder an die Bedienperson ausgegeben werden können.

Eine entsprechende Vorrichtung kann dazu über eine Annahmeeinrichtung für einen Banknotenstapel, einen Vereinzler zum Vereinzeln der Banknoten in dem Banknotenstapel, eine Transporteinrichtung zum Transport der vereinzelten Banknoten entlang eines Transportpfades, sowie die an dem Transportpfad angeordnete Prüfungseinrichtung zur Erfassung wenigstens einer Eigenschaft einer entlang des Transportpfades transportierten Banknote verfügen. Der Transportpfad führt dann zu dem Zwischenspeicher. Wertdokumente aus dem Zwischenspeicher können wahlweise in die Sicherheitsbehälter oder an die Bedienperson ausgegeben werden.

Trotz sorgfältiger Konstruktion solcher Vorrichtungen kann es bedingt durch die stark unterschiedliche mechanische Beschaffenheit von im Umlauf befindlichen, insbesondere stark benutzten, Banknoten zu Störungen beim Transport der Banknoten in der Vorrichtung, insbesondere auch Staus, entlang des Transportpfades und in bzw. aus dem Zwischenspeicher kommen, die ein weiteres Arbeiten der Vorrichtung nicht zulassen. Daher ist vorgesehen, daß die Vorrichtung zur Störungsbeseitigung geöffnet werden kann. Um Manipulationen an dem Zwischenspeicher durch Bedienpersonen, insbesondere die unbefugte Entnahme von Banknoten, zu erschweren, können solche Vorrichtung nur durch Personen geöffnet werden, die speziell dazu autorisiert sind. Da bei jeder Störung entlang des Transportpfades und insbesondere im Bereich des Zwischenspeichers somit eine autorisierte Person gerufen werden muß, ergeben sich unter Umständen längere Zeiten, in denen die Vorrichtung nicht verwendet werden kann.

In US 2005/127590 A1 ist eine Vorrichtung zur Annahme von Banknoten beschrieben, die eine Transaktionsöffnung zur Annahme eines Stapels von Banknoten, eine Vereinzelungsvorrichtung zur Vereinzelung der Banknoten des Stapels, eine Prüfeinrichtung zur Unterscheidung der Banknoten in erkannte und nicht erkannte Banknoten, und einen Transportmechanismus, dessen Antrieb von der Prüfeinrichtung abhängig ist und zum Transport der erkannten und nicht erkannten Banknoten entlang verschiedener Transportpfad dient, aufweist. Weiter verfügt die Vorrichtung über eine Box-Anordnung, die benachbart zu der Transaktionsöffnung angeordnet ist und zwei Speicherbereiche aufweist. Die Box-Anordnung ist zwischen wenigstens drei verschiedenen Positionen verschiebbar. Diese drei Positionen sind vorgegebenen Bedingungen für die Bildung eines Durchgangs zwischen den Speicherbereichen und der Transaktionsöffnung, der Vereinzelungsvorrichtung und dem Transportmechanismus, um den Stapel aufzunehmen, zu der Vereinzelungsvorrichtung zu transportieren und die erkannten Banknoten als Banknotensteilstapel bzw. die nicht erkannten Banknoten als Teilstapel zu verwerfender Banknoten zeitweise zu speichern und auf Anforderung die Teilstapel zurückzugeben. Erkannte Banknoten können in Speichereinheiten gespeichert werden.

Der vorliegenden Erfindung liegt daher die Aufgabe zugrunde, eine Vorrichtung zur Bearbeitung von Wertdokumenten bereitzustellen, bei der Störungen beim Transport von Wertdokumenten in der Vorrichtung schnell und einfach beseitigt werden können, ohne die Sicherheit der Wertdokumente zu gefährden.

Die Aufgabe wird gelöst durch eine Vorrichtung zur Bearbeitung von Wertdokumenten, insbesondere Banknoten, mit einer Prüfungseinrichtung zur Prüfung von Wertdokumenten auf wenigstens eine Eigenschaft eines Wertdokuments gemäß wenigstens einem vorgegebenen Kriterium, insbesondere einem Echtheitskriterium, die eine in einem Bearbeitungsbereich angeordnete Sensoreinrichtung zur Erfassung der Eigenschaft umfaßt, einem in einem Zwischenbereich angeordneten Zwischenspeicher zur Zwischenspeicherung wenigstens von Wertdokumenten, deren Eigenschaft bei einer Prüfung durch die Prüfungseinrichtung das Kriterium erfüllt, einer in dem Bearbeitungsbereich angeordneten Transporteinrichtung zum Transport von der Vorrichtung zugeführten Banknoten zu der Prüfungseinrichtung und von dieser zu dem Zwischenbereich, einer einen Endspeicherbereich wenigstens teilweise umschließenden Endspeichereinrichtung zur Aufnahme wenigstens eines Sicherheitsbehälters zur Speicherung von Wertdokumenten aus dem Zwischenspeicher, einem den Zwischenbereich umschließenden Zwischenbereichsgehäuse, das eine erste Öffnung, durch die von der Prüfungseinrichtung kommende Wertdokumente dem Zwischenspeicher zuführbar sind, eine zweite Öffnung, durch die Wertdokumente aus dem Zwischenspeicher in den Endspeicherbereich transportierbar sind, und ein Zwischenbereichsgehäuseelement, das zwischen einer Öffnungsstellung, in der für eine Bedienperson ein Zugriff auf den Zwischenspeicher durch einen Zugriffsbereich möglich ist, und einer Schließstellung, in der der es den Zwischenbereich gegen einen Zugriff einer Bedienperson durch den Zugriffsbereich wenigstens zur Entnahme von Wertdokumenten schützt, hin- und herbewegbar ist, aufweist, und mit einer Verriegelungseinrichtung zum Verriegeln des Zwischenbereichsgehäuseelements in der Schließstellung, wobei die Vorrichtung weiter so ausgebildet ist, daß der Zwischenspeicher gegen einen Zugriff durch eine Bedienperson wenigstens zur Entnahme eines darin gespeicherten Wertdokuments durch die erste Öffnung geschützt ist, wenn sich das Zwischenbereichsgehäuseelement in der Schließstellung befindet.

Zur Zuführung von Wertdokumenten kann die Vorrichtung weiter noch eine, gegebenenfalls wenigstens teilweise in dem Bearbeitungsbereich angeordnete, Annahmeeinrichtung zur Annahme von einzelnen Wertdokumenten und/ oder zur Annahme wenigstens eines Bündels oder Stapels von Wertdokumenten aufweisen, mittels derer Banknoten der Transporteinrichtung zugeführt werden können. Hierzu können insbesondere bekannte Einrichtungen verwendet werden.

Als Transporteinrichtung können beliebige zum Transport von, insbesondere vereinzelt vorliegenden, Wertdokumenten geeignete Einrichtungen zum Einsatz kommen. Insbesondere können Transporteinrichtung mit an sich bekannten Transportelementen wie beispielsweise durch einen Antrieb angetriebene Riemen, Rollen, angetriebenen Walzen, Umlenkelemente und/ oder Weichen verwendet werden.

Die Prüfungseinrichtung dient zur Prüfung durch die Transporteinrichtung zugeführter Wertdokumente. Sie erfaßt dazu mittels der Sensoreinrichtung die wenigstens eine Eigenschaft des Wertdokuments und prüft, ob das Wertdokument ein vorgegebenes Kriterium für die Eigenschaft erfüllt. Zur Prüfung der Eigenschaft in Abhängigkeit von bei Erfassung der Eigenschaft erzeugten Sensoreinrichtungssignalen kann die Prüfungseinrichtung eine Auswerteeinrichtung umfassen, die die Signale zur Prüfung des Kriteriums verwendet. Die Auswerteeinrichtung kann allein der Prüfungseinrichtung zugeordnet und als digitale Schaltung oder in Form eines Prozessors und eines Speichers, in dem ein durch den Prozessor ausführbares Programm zur Durchführung der Prüfung gespeichert ist, ausgeführt sein oder wenigstens teilweise durch entsprechende Software- bzw. Programmmodule für eine Steuereinrichtung zur Steuerung der Vorrichtung realisiert sein. Bei der Eigenschaft kann es sich insbesondere zum eine Eigenschaft ausgewählt aus der Gruppe optische Eigenschaften, elektrische Eigenschaften, magnetische Eigenschaften, mechanische Eigenschaften, akustische Eigenschaften oder Formeigenschaften handeln, wozu die Sensoreinrichtung einen entsprechenden Sensor aufweisen kann. Insbesondere kann die Eigenschaft des Wertdokuments als Echtheitsmerkmal ausgeprägt sein, wie es beispielsweise für Banknoten verwendet wird. Das vorgegebene Kriterium, das zu erfüllen ist, bezieht sich dann auf das wenigstens näherungsweise Vorliegen der Eigenschaft, wie sie bei einem echten Wertdokument ausgeprägt ist. Selbstverständlich kann die Prüfeinrichtung auch zur Prüfung mehrerer Eigenschaften, insbesondere des Vorhandenseins mehrerer vorgegebener Sicherheitsmerkmale, ausgebildet sein, die zur Erfüllung des Kriteriums kumulativ vorliegen müssen.

Das Zwischenbereichsgehäuse dient zum Schutz des Zwischenspeichers vor unbefugtem Zugriff. Unter einem unbefugten Zugriff wird ein Zugriff verstanden, bei dem eine Person versucht, mit einfacher körperlicher Gewalt oder durch Manipulation Zugang zu dem Zwischenspeicher zu erhalten, um diesen ganz oder Wertdokumente aus diesem zu entfernen. Zum Transport zwischen dem Bearbeitungsbereich und dem Zwischenspeicher bzw. von dem Zwischenspeicher zu dem Endspeicherbereich und damit zu wenigstens einem darin befindlichen Sicherheitsbehälter sind in dem Zwischenbereichsgehäuse die erste und die zweite Öffnung vorgesehen. Sollten Wertdokumente dem Zwischenspeicher noch von anderen Modulen der Vorrichtung in dem Bearbeitungs- und/ oder Endspeicherbereich zugeführt oder von dem Zwischenspeicher an diese ausgegeben werden, kann das Zwischenbereichsgehäuse der ersten und/ oder der zweiten öffnung entsprechende zusätzlich Öffnungen aufweisen. Alle Ausführungen zu der ersten Öffnung gelten optional auch für diese zusätzlichen Öffnungen. Das Zwischenbereichsgehäuse kann beispielsweise aus hinreichend stabilen Blechen gebildet sein, kann aber auch Teile anderer Bauelemente der Vorrichtung umfassen, die beispielsweise im Bearbeitungs- und/oder Endspeicherbereich angeordnet sind oder diese Bereiche wenigstens teilweise umschließen und/ oder begrenzen.

Zur Ausgabe von Wertdokumenten aus dem Zwischenspeicher kann das Zwischenbereichsgehäuse insbesondere noch eine Ausgabeöffnung zu dem Bearbeitungsbereich aufweisen, durch die Wertdokumente aus dem Zwischenspeicher in den Bearbeitungsbereich oder ein von außen zugängliches Fach der Vorrichtung ausgegeben werden können.

Zur Wartung des Zwischenspeichers oder zur Störungsbeseitigung oder zu anderen Tätigkeiten an oder mit dem Zwischenspeicher ist in dem Zwischenbereichsgehäuse das bewegliche Zwischenbereichsgehäuseelement vorgesehen, das in der Öffnungsstellung einen Zugriffsbereich freigibt, durch den ein Zugriff auf den Zwischenspeicher bzw. Wertdokumente darin möglich ist, in der Schließstellung diesen Zugriff dagegen verhindert. Um einen Zugriff nur durch autorisierte Personen zuzulassen, ist die Verriegelungseinrichtung vorgesehen, mittels derer das Zwischenbereichsgehäuseelement in der Schließstellung verriegelbar ist. Vorzugsweise haben daher nur Personen, die die Verriegelungseinrichtung betätigen können, Zugriff auf den Zwischenbereich wenigstens zur Entnahme von Wertdokumenten hieraus.

Da weiter die Vorrichtung so ausgebildet ist, daß der Zwischenspeicher gegen einen Zugriff durch eine Bedienperson durch die erste Öffnung geschützt ist, wenn sich das Zwischenbereichsgehäuseelement in der Schließstellung befindet, kann einerseits Bedienpersonen ein Zugriff auf den Bearbeitungsbereich und insbesondere die darin befindliche, für Transportstörungen am wahrscheinlichsten anfällige Transporteinrichtung ermöglicht werden, die keinen Zugriff auf den Zwischenspeicher haben sollen. Beispielsweise können Wertdokumente einzahlende Personen gegebenenfalls auftretende Störungen im Bearbeitungsbereich selbst beseitigen, ohne das Zwischenbereichsgehäuse öffnen zu müssen. Daher ist in diesen Fällen eine Anwesenheit einer speziell autorisierten Person nicht notwendig, so daß Störungen schnell beseitigt werden können und die Verfügbarkeit der Vorrichtung erhöht wird. Andererseits ist der Zwischenspeicher gegen unbefugten Zugriff gesichert, so daß die Einzahlung von Wertdokumenten mit hoher Sicherheit erfolgen kann. Schließlich ist einer Person, die die Verriegelungseinrichtung betätigen kann, eine Störungsbeseitigung im Bereich des Zwischenspeichers möglich.

Alternativ wird die Aufgabe gelöst durch eine Vorrichtung zur Bearbeitung von Wertdokumenten, insbesondere Banknoten, die über eine Prüfungseinrichtung zur Prüfung von Wertdokumenten auf wenigstens eine Eigenschaft eines Wertdokuments gemäß wenigstens einem vorgegebenen Kriterium, insbesondere einem Echtheitskriterium, mit einer in einem Bearbeitungsbereich angeordneten Sensoreinrichtung zur Erfassung der Eigenschaft, eine in einem Zwischenbereich angeordneten Umlenkeinrichtung zur Umlenkung wenigstens von Wertdokumenten, deren Eigenschaft bei einer Prüfung durch die Prüfungseinrichtung das Kriterium erfüllt, eine in dem Bearbeitungsbereich angeordneten Transporteinrichtung zum Transport von der Vorrichtung zugeführten Wertdokumenten zu der Prüfungseinrichtung und von dieser zu dem Zwischenbereich, eine einen Endspeicherbereich wenigstens teilweise umschließenden Endspeichereinrichtung zur Aufnahme wenigstens eines Sicherheitsbehälters zur Speicherung von Wertdokumenten aus dem Zwischenbereich, ein den Zwischenbereich umschließendes Zwischenbereichsgehäuse, das eine erste Öffnung, durch die von der Prüfungseinrichtung kommende Wertdokumente der Umlenkeinrichtung zuführbar sind, eine zweite Öffnung, durch die Wertdokumente von der Umlenkeinrichtung in den Endspeicherbereich transportierbar sind, und ein Zwischenbereichsgehäuseelement, das zwischen einer Öffnungsstellung, in der für eine Bedienperson ein Zugriff auf die Umlenkeinrichtung durch einen Zugriffsbereich möglich ist, und einer Schließstellung, in der es den Zwischenbereich gegen einen Zugriff einer Bedienperson durch den Zugriffsbereich wenigstens zur Entnahme von Wertdokumenten schützt, hin und herbewegbar ist, aufweist, und eine Verriegelungseinrichtung zum Verriegeln des Zwischenbereichsgehäuseelements in der Schließstellung, verfügt. Die Vorrichtung ist weiter so ausgebildet, daß die Umlenkeinrichtung gegen einen Zugriff durch eine Bedienperson wenigstens zur Entnahme eines darin gespeicherten Wertdokuments durch die erste Öffnung geschützt ist, wenn sich das Zwischenbereichsgehäuseelement in der Schließstellung, befindet.

Prinzipiell ist es nicht notwendig, daß der Bearbeitungsbereich abgedeckt ist. Vorzugsweise weist die Vorrichtung jedoch weiter eine Bearbeitungsbereichsabdeckung auf mit einem Abdeckungselement, das zwischen einer Schließstellung, in der der Bearbeitungsbereich durch die Bearbeitungsbereichsabdeckung abgedeckt ist, und einer Öffnungsstellung, in der für eine Bedienperson ein Zugriff auf den Bearbeitungsbereich, insbesondere wenigstens teilweise auf darin gelegene Teile der Transporteinrichtung, möglich ist, hin- und herbewegbar ist. Durch die Bearbeitungsbereichsabdeckung kann zum einen die Transporteinrichtung und der durch diese gegebene Transportpfad gegen unbeabsichtigte Eingriffe und dadurch hervorgerufene Störungen gesichert werden. Zum anderen kann eine Bedienperson durch Bewegung des Abdeckungselements, beispielsweise ein Drehen, Schwenken oder Verschieben, in die Öffnungsstellung Zugriff auf den Transportpfad erlangen, um Störungen zu beseitigen. Weiter werden Einrichtungen in dem Bearbeitungsbereich weitgehend gegen unbeabsichtigte Beschädigung geschützt. Vorzugsweise ist nur ein einzelnes Abdeckungselement vorgesehen, das so ausgebildet und angeordnet ist, daß nach Bewegung des Abdekkungselements in die Öffnungsstellung der gesamte Transportpfad wenigstens von einem Vereinzler oder einer Wertdokumenteingabeeinrichtung bis zu der Öffnung zu dem Zwischenbereich zur Beseitigung von Transportstörungen zugänglich ist.

Um einen Zugriff beliebiger Personen auf den Bearbeitungsbereich und insbesondere auch darin angeordnete Bauteile zu verhindern, besitzt die Vorrichtung vorzugsweise eine weitere Verriegelungseinrichtung, mittels derer das Abdeckungselement in der Schließstellung verriegelbar ist.

Das Abdeckungselement kann im einfachsten Fall als Blech oder Kunststoffformteil ausgebildet sein, das nur der Abdeckung dient. Es ist jedoch bevorzugt, daß es auch als Träger für Teile der Prüfungseinrichtung und/oder der Transporteinrichtung dient. Dies hat den Vorteil, daß ein wesentlich einfacherer und insbesondere auch kompakterer Aufbau der Vorrichtung erreicht werden kann. Insbesondere in dem Fall, daß die Transporteinrichtung wenigstens zwei Abschnitte aufweist, zwischen denen der Transportpfad verläuft, und von denen nur einer an dem Abdeckungselement gehalten ist, kann eine Bedienperson besonders einfach zur Störungsbeseitigung auf den Transportpfad zugreifen, da dieser mit Bewegung des Abdeckungselements wenigstens teilweise freigelegt wird.

Ein Zugriff von dem Bearbeitungsbereich auf den Zwischenbereich zur unbefugten Entnahme von Wertdokumenten aus dem Zwischenspeicher kann auf verschiedene Weise mit hoher Sicherheit verhindert werden. Die im Folgenden geschilderten Möglichkeiten können jeweils allein oder in Kombination miteinander vorgesehen sein.

Bei einer ersten bevorzugten Variante kann die erste und/ oder zweite Öffnung die Form eines Schlitzes mit einer Breite von weniger als 9 mm, vorzugsweise weniger als 5 mm aufweisen. Dies hat den Vorteil, daß ein Zugriff auf den Zwischenspeicher durch die Öffnung allenfalls mit einem entsprechend dünnen Werkzeug erfolgen kann, was aber eine erhebliche Geschicklichkeit und den Besitz eines geeigneten Werkzeugs erfordern würde. Die Länge des Schlitzes richtet sich dann vorzugsweise nach der größten Ausdehnung der Wertdokumente quer zur Transportrichtung unmittelbar vor der jeweiligen Öffnung.

Bei einer zweiten bevorzugten Variante ist wenigstens in dem Fall, daß sich das Abdeckungselement in der Öffnungsstellung und das Zwischenbereichsgehäuseelement in der Schließstellung befinden, die erste Öffnung zu dem Bearbeitungsbereich so weit verschlossen, daß ein Wertdokument nicht durch die erste Öffnung transportiert werden kann. Wenigstens in dem Fall, daß sich das Abdeckungselement und das Zwischenbereichsgehäuseelement in der jeweiligen Schließstellung befinden, ist jedoch ein Transport zwischen dem Zwischenspeicher und dem Bearbeitungsbereich durch die erste Öffnung möglich. Diese Ausführungsform hat den Vorteil, daß auch bei Verwendung eines Werkzeugs ein unbefugter Zugriff auf den Zwischenspeicher aus dem Bearbeitungsbereich verhindert werden kann, was die Sicherheit des Zwischenbereichs nochmals erhöht. Zum Verschließen der ersten Öffnung kann ein beliebiges bewegliches Element dienen, das bei oder nach Bewegung des Abdeckungselements in die Öffnungsstellung durch wenigstens ein mit dem Abdeckungselement mechanisch gekoppeltes Koppelelement oder einen durch Betätigung bzw. Bewegung des Abdeckungselements in die Öffnungsstellung betätigten elektrischen Antrieb bewegbar ist. Besonders bevorzugt kann das Abdeckungselement so geformt und angebracht sein, daß das Abdeckungselement in der Öffnungsstellung die erste Öffnung wenigstens teilweise verschließt, wenn sich das Zwischenbereichsgehäuseelement in der Schließstellung befindet. Diese Weiterbildung erlaubt einen besonders einfachen Aufbau der Vorrichtung.

Bei einer dritten bevorzugten Variante, die auch eine spezielle Ausführung der zweiten Variante darstellen kann, ist wenigstens ein Element in dem Zwischenbereichsgehäuse oder dem Bearbeitungsbereich, ein Element des Zwischenbereichsgehäuses und/oder der Zwischenspeicher relativ zu dem Bearbeitungsbereich zwischen einer ersten Stellung, in der Wertdokumente zwischen dem Zwischenspeicher und dem Bearbeitungsbereich durch die erste Öffnung transportierbar sind, und einer zweiten Stellung, in der wenigstens in dem Fall, daß sich das Abdeckungselement in der Öffnungsstellung und das Zwischenbereichsgehäuseelement in der Schließstellung befinden, ein Transport eines Wertdokuments aus dem Zwischenspeicher durch die erste Öffnung zu dem Bearbeitungsbereich verhindert wird, bewegbar. Damit kann auf einfache Weise ein Zugriff aus dem Bearbeitungsbereich auf eine Ein- und/ oder Ausgabe des Zwischenspeichers und damit Wertdokument in diesem verhindert werden. Insbesondere ist ein Zugriff auch unter Zuhilfenahme eines Werkzeugs wie einer Pinzette kaum möglich. Diese Ausführungsform ist besonders günstig in dem Fall, daß das Zwischenbereichsgehäuse eine weitere Öffnung, beispielsweise zu dem Bearbeitungsbereich aufweist, durch die bestimmte Wertdokumente aus dem Zwischenspeicher in einen Ausgabepfad für solche Wertdokumente zu einer Ausgabeeinrichtung, beispielsweise ein Fach, transportiert werden können. Der Zwischenspeicher kann dann nämlich gleichzeitig als Weiche fungieren.

Vorzugsweise weist die Vorrichtung einen Stellantrieb zur Bewegung des Elements in dem Zwischenbereichsgehäuse bzw. dem Bearbeitungsbereich, dem Element des Zwischenbereichsgehäuses und/ oder des Zwischenspeichers auf, so daß die Öffnung durch Ansteuerung des Stellantriebs automatisch bei oder nach Bewegung des Abdeckungselements in die Öffnungsstellung verschließbar ist.

Die Verriegelungseinrichtung ist vorzugsweise so gestaltet, daß nicht jede beliebige Person sie betätigen kann. Vielmehr soll sie nur durch autorisierte Personen zu betätigen sein, die hierzu über, vorzugsweise nur ihnen zugängliche, entsprechende Mittel oder Daten verfügen. Auch hier können die im Folgenden geschilderten Ausführungsformen alternativ oder kumulativ verwendet werden.

Als einfachste Varianten kann die Verriegelungseinrichtung der Vorrichtung ein mechanisch von einer Bedienperson zu betätigendes Schloß aufweisen, bei dem es sich vorzugsweise um ein Sicherheitsschloß handeln kann. Zum Öffnen des Zwischenbereichsgehäuses befugte Personen erhalten einen Schlüssel zu dem Schloß.

Bei anderen bevorzugten Varianten ist die Verriegelungseinrichtung der Vorrichtung elektrisch und/oder pneumatisch und/oder hydraulisch ansteuerbar. Dabei wird unter einer elektrisch ansteuerbaren Verriegelungseinrichtung auch eine Verriegelungseinrichtung verstanden, die einen Elektromagneten zum Verriegeln aufweist. Diese Ausführungsform hat den Vorteil, daß die Verriegelungseinrichtung von anderen Einrichtungen angesteuert werden kann, was eine sicherere Prüfung der Befugnis einer Person und eine automatische Betätigung in Abhängigkeit von der Prüfung zuläßt. Insbesondere kann die Verriegelungseinrichtung wenigstens teilweise durch einen, vorzugsweise elektrischen, Antrieb der Vorrichtung realisiert sein, der zum Öffnen und Schließen des Zwischenbereichsgehäuseelements dient.

Vorzugsweise umfaßt die Vorrichtung dann wenigstens eine Zugriffsdatenerfassungseinrichtung zur Erfassung von Zugriffsdaten und wenigstens eine mit der Zugriffsdatenerfassungseinrichtung über eine Signalverbindung verbundene Zugriffssteuereinrichtung zur Prüfung erfaßter Zugriffsdaten auf die Erfüllung wenigstens eines vorgegebenen Zugriffskriteriums und zur Ansteuerung der Verriegelungseinrichtung in Abhängigkeit von der Prüfung. Diese Variante erlaubt in vorteilhafter Weise die Verwendung einer Vielzahl von Authentisierungsmöglichkeiten. Zur Prüfung des Zugriffskriteriums werden dabei selbstverständlich die erfaßten Zugriffsdaten verwendet; das Zugriffskriterium kann beispielsweise eine bestimmte Konsistenzeigenschaft der Zugriffsdaten und/ oder die Übereinstimmung wenigstens von Teilen der Zugriffsdaten mit vorgegebenen in der Vorrichtung gespeicherten Daten und/oder das Vorliegen bestimmter Eigenschaften der Zugriffsdaten beinhalten.

Bei einer bevorzugten Variante umfaßt die Zugriffsdatenerfassungseinrichtung eine Leseeinrichtung zum Lesen von Zugriffsdaten von einem mobilen Datenträger oder -speicher, insbesondere ein Kartenlesegerät zum Lesen von Chip-Karten. Unter mobilen Datenträgern bzw. -speichern werden dabei insbesondere optische Datenträger wie beispielsweise CD oder DVD oder nichtflüchtige Speicher, beispielsweise USB-Speicher oder Chips auf Chip-karten verstanden. Die Verwendung einer solchen Zugriffsdatenerfassungseinrichtung hat den Vorteil, daß zum einen ein besonders fälschungssicheres Medium zur Prüfung der Zugriffsberechtigung verwendet werden kann und daß zum anderen eine vergleichsweise große Menge von Daten als Zugriffsdaten verwendet werden kann. Die Leseeinrichtung kann vorzugsweise auch als Datenschreibeinrichtung ausgebildet sein, sofern der vorgesehene Typ des Datenträgers bzw. -speichers einen schreibenden Zugriff zuläßt. Unter einem Kartenlesegerät wird insbesondere jegliche Einrichtung verstanden, mittels derer Daten von, vorzugsweise flachen, Gegenständen gelesen werden können. Die Daten können dabei als optisch erkennbares Muster beispielsweise in Form von Zeichenketten oder Bildern vorliegen. Alternativ oder kumulativ können Daten in Form von magnetischen Eigenschaften der Karte, beispielsweise eines Magnetstreifens, oder der Form der Karte bzw. Teilen davon gegeben sein. Weiter kann die Karte vorzugsweise alternativ oder kumulativ ein Speichermedium, beispielsweise einen Chip, aufweisen, auf den kontaktlos oder mit Kontakt zugegriffen werden kann. Das Kartenlesegerät verfügt dazu jeweils über entsprechende Sensoren, Antennen und/oder Kontakte. Die Daten brauchen nicht alle auf die gleiche Weise gespeichert zu sein, vielmehr ist es möglich, daß verschiedene Anteile in unterschiedlichen Arten und Weisen gespeichert sind. Zur Authentisierung können dann insbesondere auf der Karte gespeicherte Daten verwendet werden, die nach Auslesen mittels des Kartenlesegeräts von der Zugriffssteuereinrichtung verwendet werden.

Bei einer anderen bevorzugten Variante umfassen die Zugriffsdaten biometrische Daten einer Bedienperson und die Zugriffsdatenerfassungseinrichtung der Vorrichtung weist eine Einrichtung zur Erfassung der biometrisehen Daten auf. Diese Ausführungsform hat den Vorteil, daß eine Bedienperson einen zur Prüfung der Zugriffberechtigung auf den Zwischenspeicher verwendeten Gegenstand oder Code nicht verlieren oder verleihen kann. Auch ein Diebstahl ist nicht möglich, so daß eine sehr hohe Sicherheit erreicht werden kann. Die Einrichtung zur Erfassung der biometrischen Daten kann vorzugsweise zur Erfassung von Stimmen, Fingerabdrücken, optischer Merkmale der Iris oder des Augenhintergrundes, der Proportionen von Körperteilen oder anderer individueller Merkmale des menschlichen Körpers oder Verhaltens ausgebildet sein, um nach der Erfassung der Daten eine Stimmerkennung, eine Fingerabdruckserkennung, eine Iris- bzw. Augenhintergrundserkennung bzw. Erkennung der anderen Merkmale durchführen zu können.

Diese Formen der Verriegelungseinrichtung können auch bei der Verriegelung des Abdeckungselements für den Bearbeitungsbereich Verwendung finden, wobei jedoch in der Anwendung nicht alle Benutzer, die eine Berechtigung zum Zugriff auf den Bearbeitungsbereich haben, auch eine Berechtigung für einen Zugriff auf den Zwischenspeicher haben.

Der Endspeicherbereich ist durch die Endspeichereinrichtung, die vorzugsweise als Tresor ausgebildet ist, umschlossen und über die genannte Öffnung des Zwischenbereichsgehäuses mit dem Zwischenbereich zum Transport von Wertdokumenten verbunden. Dabei können die den Endspeicherbereich umschließende Endspeichereinrichtung, insbesondere der Tresor, und das Zwischenbereichsgehäuse eine gemeinsame Wand aufweisen, in der die Öffnung angeordnet ist. Die den Endspeicherbereich umschließende Endspeichereinrichtung kann ebenfalls ein zwischen einer Öffnungsstellung, in der Sicherheitsbehälter in dem Endspeicherbereich zugänglich sind, und einer Schließstellung, in der kein Zugriff auf den Sicherheitsbehälter möglich ist, bewegbares Schließelement aufweisen, das mittels einer weiteren Verriegelungseinrichtung in der Schließstellung verriegelbar ist. Für die Verriegelungseinrichtung kommen die gleichen Varianten in Betracht wie für die Verriegelungseinrichtung für das Zwischenbereichsgehäuseelement. Dies hat den Vorteil, daß eine unbefugte Entnahme eines Sicherheitsbehälters aus der Endspeichereinrichtung stark erschwert bzw. verhindert wird.

Bei Verwendung von Verriegelungseinrichtungen für das Schließelement und/ oder das Abdeckungselement können diese insbesondere eine gemeinsame Erfassungseinrichtung und einen gemeinsamen Prozessor und einen gemeinsamen Speicher, in dem wenigstens ein von dem Prozessor ausführbares Programm zur Steuerung der jeweiligen Verriegelungseinrichtungen gespeichert ist, aufweisen. Der Prozessor und der Speicher sind dann Teil einer Zugriffssteuereinheit. Insofern ist es bevorzugt, daß bei einer Vorrichtung mit ansteuerbaren Verriegelungseinrichtungen für das Zwischenbereichsgehäuseelement und/ oder das Schließelement und/ oder das Abdekkungselement eine einzige Erfassungseinrichtung und eine einzige Zugriffssteuereinrichtung zur Ansteuerung der Verriegelungsmechanismen vorgesehen sind.

Um ein Auftreten von Störungen beim Transport von Wertdokumenten in vorteilhafter Weise möglichst gering halten zu können, ist die Vorrichtung vorzugsweise weiter so ausgebildet, daß auf dem Transportweg von Wertdokumenten in den oder die Sicherheitsbehälter keine Weiche im Endspeicherbereich vorgesehen ist.

Insbesondere ist es dazu bei der Vorrichtung bevorzugt, daß in dem Zwischenbereichsgehäuse wenigstens eine weitere Öffnung zu dem Endspeicherbereich angeordnet ist, so daß durch die Öffnungen zu dem Endspeicherbereich Wertdokumente in wenigstens zwei Fächer eines vorgegebenen Sicherheitsbehälters mit wenigstens zwei Fächern oder in wenigstens zwei vorgegebenen Sicherheitsbehälter in dem Endspeicherbereich transportierbar sind. In dem Endspeicherbereich können dazu insbesondere Aufnahmeeinrichtungen bzw. Aufnahmen oder Führungen für den oder die Sicherheitsbehälter vorgesehen sein, damit diese in einer vorgegebenen Relativlage zu den Öffnungen aufgestellt werden können. Darüber hinaus sind die Sicherheitsbehälter und die Lage der Öffnungen zueinander und zu der Aufnahmeeinrichtung bzw. den Aufnahmen bzw. Führungen so aufeinander abgestimmt, daß die Öffnungen in dem Zwischenbereichsgehäuse einen Transport in den oder die Sicherheitsbehälter erlauben. Weist die Vorrichtung statt des Zwischenspeichers die Umlenkeinrichtung auf, umfaßt diese vorzugsweise wenigstens eine durch Signale ansteuerbare Weiche, mittels derer zugeführte Wertdokumente in Abhängigkeit von den Signalen einer der Öffnungen zu dem Endspeicherbereich zugeführt werden können.

Vorzugsweise werden wenigstens Teile der Vorrichtung elektrisch angesteuert. Die Vorrichtung weist daher vorzugsweise eine Steuereinrichtung auf, die wenigstens eine bei der Prüfung durch die Prüfungseinrichtung erkannte Eigenschaft von in den Zwischenspeicher zwischengespeicherten Wertdokumenten erfaßt und speichert. Die gespeicherten Daten können insbesondere die Art und/oder den Typ von Wertdokumenten, im Fall von Banknoten beispielsweise ihre Denomination, betreffen und der Lage der jeweiligen Wertdokumente in dem Zwischenspeicher zugeordnet sein. Weiter kann die Anzahl der zwischengespeicherten Wertdokumente gespeichert sein. Die Steuereinrichtung kann insbesondere einen Prozessor und einen Speicher, in dem Instruktionen zur Ausführung durch den Prozessor gespeichert sind, umfassen. Die Steuereinrichtung kann von der Prüfungseinrichtung physisch getrennt sein, vorzugsweise verfügt die Steuereinrichtung jedoch über einen Prozessor und einen Speicher, auf den der Prozessor zugreifen kann und in dem Instruktionen zur Abarbeitung durch den Prozessor und insbesondere zur Prüfung des Kriteriums gespeichert sind. Weiter können die Instruktionen so gewählt sein, daß bei deren Ausführung durch den Prozessor eine Zuordnung einer Lage des jeweiligen Wertdokuments in dem Zwischenspeicher in der Folge der anderen zwischengespeicherten Wertdokumente zu der Art und/ oder dem Typ und/ oder dem Wert des Wertdokuments vorgenommen und abgespeichert wird. Darüber hinaus kann die Steuereinrichtung die Zugriffssteuereinrichtung umfassen, wozu die gespeicherten Instruktionen Instruktionen zur Prüfung erfaßter Zugriffsdaten auf die Erfüllung des wenigstens einen vorgegebenen Zugriffskriteriums umfassen können. Diese Ausführungsformen haben den Vorteil, daß nur ein Prozessor und ein Speicher bereitgestellt zu werden braucht, was eine wesentliche konstruktive Vereinfachung darstellt.

Insbesondere ist es dann bevorzugt, daß die Vorrichtung, die wenigstens einen Stellantrieb zur Bewegung des wenigstens einen Elements in dem Zwischenbereichsgehäuse oder des wenigstens einen Elements des Zwischengehäuses oder des Zwischenspeichers und eine Stellungserfassungseinrichtung zur Erfassung einer Bewegung des Abdeckungselements in die Öffnungsstellung und/oder des Erreichens der Öffnungsstellung umfaßt, und daß die Steuereinrichtung dazu ausgebildet ist, in Abhängigkeit von Signalen der Stellungserfassungseinrichtung und/oder Daten in der Stellungserfassungseinrichtung zur Erfassung einer Bewegung den Stellantrieb so anzusteuern, daß ein Transport zwischen dem Zwischenspeicher und dem Bearbeitungsbereich möglich ist oder nicht. Diese Ausführungsform hat den Vorteil, daß bei bzw. nach Bewegung des Abdeckungselements in die Öffnungsstellung automatisch ein möglicher Zugang zu dem Zwischenspeicher aus dem Bearbeitungsbereich blockiert wird. Die Stellungserfassungseinrichtung kann beispielsweise einen Stellungs- oder Bewegungssensor für das Abdeckungselement umfassen oder eine Einrichtung, die einen Befehl zum elektrischen Bewegen des Abdeckungselements in die Öffnungsstellung erfaßt und/oder ausführt und/ oder speichert oder entsprechende Stellungsdaten, die die Stellung des Abdeckungselements wiedergeben, abspeichert. Ein Beispiel für eine solche Einrichtung kann die Steuereinrichtung sein.

Besitzt die Vorrichtung zwei Öffnungen von dem Zwischenbereich in den Endspeicherbereich, weist sie vorzugsweise wenigstens einen Stellantrieb zur Bewegung des weiteren Elements in oder an dem Zwischenbereichsgehäuse und/ oder des weiteren Elements des Zwischenbereichsgehäuses und/ oder des Zwischenspeichers auf, und zur Ausgabe von Wertdokumenten ist die Steuereinrichtung dazu ausgebildet, den Stellantrieb so anzusteuern, daß in dem Zwischenspeicher gespeicherte Wertdokumente in Abhängigkeit von dem Füllstand in dem Sicherheitsbehälter und/ oder in Abhängigkeit von in die Steuereinrichtung eingegebenen Daten und/oder entsprechend ihrer gespeicherten Eigenschaft durch eine der Öffnungen zu dem Endspeicherbereich transportierbar sind. Damit kann in vorteilhafter Weise im Fall von Wertdokumenten in Form von Banknoten leicht bereits in der Vorrichtung eine Sortierung beispielsweise nach Denominationen erfolgen. Auch ist es bei Verwendung von zwei Sicherheitsbehältern oder eines Sicherheitsbehälters mit zwei Fächern möglich, in Abhängigkeit von dem Füllstand in wenigstens einem der Fächer die Öffnung und damit das Fach auszuwählen, durch die bzw. in das die folgenden Wertdokumente transportiert werden sollen. Insbesondere kann ein Wechsel von einer der Öffnungen auf eine andere der Öffnungen erfolgen, wenn das entsprechende Fach gefüllt ist. Vorzugsweise verfügt die Steuereinrichtung hierzu über eine Schnittstelle, über die Signale oder Daten über den Füllstand in einen in der Vorrichtung eingesetzten Sicherheitsbehälter empfangbar sind. Alternativ kann die Steuereinrichtung auch die Anzahl der in den Sicherheitsbehälter ausgegebenen Wertdokumente erfassen und in Abhängigkeit von dieser Anzahl die Öffnung wählen. Weiter können die Daten, die über eine entsprechende Eingabeeinrichtung in die Steuereinrichtung eingebbar sein können, beispielsweise eine Person oder Organisation identifizieren, denen die Wertdokumente zugeordnet werden sollen. Die entsprechenden Daten können beispielsweise durch die bereits oben beschriebenen Zugriffsdaten gegeben sein.

Die zu Anfang des letzten Absatzes beschriebene Ausführungsform hat allgemein den weiteren Vorteil, daß eine Verteilung von Wertdokumenten auf verschiedene Fächer eines Sicherheitsbehälters oder zwei verschiedene Sicherheitsbehälter ohne eine Weiche im Endspeicherbereich erreicht werden kann. Vorzugsweise ist denn auch in dem Endspeicherbereich keine Weiche angeordnet. Dies hat den weiteren Vorteil, daß das Risiko des Auftretens von Transportstörungen in dem Endspeicherbereich weitgehend reduziert werden kann. Dies ist besonders günstig, da zum einen Bedienpersonen, denen ein Zugriff auf den Bearbeitungs- und/oder Zwischenbereich möglich ist, häufig keinen Zugriff auf den Endspeicherbereich haben und daher Störung dort nicht beseitigen können. Zum anderen sind Bedienpersonen, die Zugriff zu dem Endspeicherbereich haben, beispielsweise Werttransportunternehmen, nur selten anwesend, so daß eine Störung in diesem Bereich die Verfügbarkeit der Vorrichtung drastisch reduzieren könnte.

Ist der Zwischenspeicher bewegbar, kann der Stellantrieb in dieser und der in dem vorhergehenden Absatz geschilderten Ausführungsform derselbe sein und braucht nur entsprechend angesteuert zu werden.

Der Zwischenspeicher kann grundsätzlich beliebig ausgebildet und in der Vorrichtung aufgenommen sein. Bei einer bevorzugten Ausführungsform der Vorrichtung ist der Zwischenspeicher der Vorrichtung entnehmbar, wenn sich das Zwischenbereichsgehäuseelement in der Öffnungsstellung befindet. Dies erlaubt es, für die Dauer einer Betriebsruhe den Zwischenspeicher der Vorrichtung zu entnehmen und an einem anderen sicheren Ort zu verwahren, ohne vorher darin zwischengespeicherte Wertdokumente entnehmen zu müssen. Darüber hinaus kann bei einer Funktionsstörung des Zwischenspeichers dieser zur Beseitigung der Störung leicht entnommen und gegen einen anderen ausgetauscht werden, so daß die Verfügbarkeit der Vorrichtung nicht stark eingeschränkt wird.

Vorzugsweise umfaßt bei der Vorrichtung der Zwischenspeicher einen Trommelspeicher und/ oder einen Wickelspeicher. Unter einem Wickelspeicher wird insbesondere ein Speicher verstanden, der so ausgebildet ist, daß blattförmige Wertdokumente zwischen zwei Riemen oder Bändern vereinzelt aufgenommen werden können, wobei die Riemen oder Bänder bzw. entsprechende Abschnitte derselben auf einen Körper aufgewickelt werden, wenn zwischen ihnen ein Wertdokument aufgenommen ist. Je nach Art des Bandes wird ein Wickelspeicher teilweise auch als Folienspeicher bezeichnet. Diese Verwendung eines Wickelspeichers hat den Vorteil, daß Wertdokumente vereinzelt zwischengespeichert werden, so daß ein Vereinzler in dem Zwischenbereich nicht notwendig ist. Auch Trommelspeicher, wie sie beispielsweise in der EP 1 220167 A1 oder EP 0151 808 A1 beschrieben sind, oder Trommelspeicher mit in Abhängigkeit von einer Anzahl der darin gespeicherten Wertdokumente variablem Durchmesser können verwendet werden. Trommelspeicher können, je nach Ausführung den Vorteil aufweisen, daß die Wertdokumente in ihnen bereits sortiert, bei Banknoten beispielsweise nach Denominationen sortiert, zwischengespeichert werden können, was die Ausgabe in die Sicherheitsbehälter beschleunigen kann.

Besonders bevorzugt ist der Trommelspeicher bzw. Wickelspeicher dreh-oder schwenkbar gelagert. Ein zur automatischen Drehung des Wickelspeichers vorgesehener Stellantrieb kann dann insbesondere einen Dreh- oder Schwenkantrieb zum Drehen bzw. Schwenken des Trommel- oder Wickelspeichers aufweisen. Dies hat den Vorteil, daß ein Ein- und Ausgabebereich des Wickelspeichers, wie zuvor geschildert, zur Sperrung eines Zugriffs auf den Zwischenspeicher in eine Lage gedreht werden, in der ein Zugriff auf den Ein- und Ausgabebereich nicht notwendig ist. Weiter kann der Zwischenspeicher bzw. dessen Ein- und Ausgabe bei Verwendung von wenigstens zwei Öffnungen zwischen dem Zwischenbereich und dem Endspeicherbereich zur wahlweisen Zuführung der zwischengespeicherten Wertdokumente zu einer der Öffnungen verwendet werden. Darüber hinaus erfordert die Bewegung des Wickelspeichers nur sehr wenig Raum, so daß ein kompakter Aufbau der Vorrichtung erzielt werden kann.

Die Vorrichtung kann prinzipiell so ausgebildet sein, daß ihr Wertdokumente nur einzeln zugeführt werden können. Dazu kann beispielsweise ein entsprechender, automatisch arbeitender Einzug vorgesehen sein. Es ist jedoch bevorzugt, daß bei der Vorrichtung an oder in einem durch die Transporteinrichtung bestimmten Transportpfad wenigstens zum Zwischenspeicher vor der Prüfungseinrichtung ein Vereinzler zum Vereinzeln in einem Stapel zugeführter Wertdokumente angeordnet ist. Der Vereinzler ist vorzugsweise so angeordnet, daß er durch Öffnen des Abdeckungselements wenigstens teilweise freigelegt werden kann.

Prinzipiell kann der Transportpfad für die Wertdokumente zu dem Zwischenspeicher beliebig verlaufen. Vorzugsweise verläuft bei der Vorrichtung ein bzw. der durch die Transporteinrichtung bestimmte Transportpfad jedoch zum Zwischenbereich ungefaltet. Unter einem ungefalteten Verlauf zu dem Zwischenbereich wird dabei verstanden, daß der Transportpfad bei Einzelführung von dem Wertdokumenteinzug oder sonst von dem Vereinzler zu dem Zwischenbereich geradlinig verläuft oder aus wenigstens einer gedachten Blickrichtung, vorzugsweise durch das Abdeckungselement, in einer durch den genannten Transportpfad bzw. die durch diesen definierten Transportrichtungen aufgespannten Ebene auf den Transportpfad gesehen keine Hinterschneidungen aufweist. Der ungefaltete Transportpfad braucht daher nicht unbedingt völlig geradlinig zu verlaufen; vielmehr können auch Änderungen der Transportrichtung auftreten, die außer an den Schnittstellen zu der Eingabeeinrichtung, beispielsweise dem Einzug, bzw. Vereinzler bzw. dem Zwischenbereich einen Winkel von 20° nicht überschreiten. Ein solcher durch eine entsprechende Auslegung der Transporteinrichtung gegebene Verlauf des Transportpfades bietet den Vorteil, daß nur ein geeignet dimensioniertes Abdeckungselement verwendet zu werden braucht, so daß ein Benutzer einfach nur durch Bewegung des einen Abdeckungselements Zugriff auf den gesamten Transportpfad hat.

Weiter ist es bevorzugt, daß die Steuereinrichtung dazu ausgebildet ist, ein Ende des Transports von Wertdokumenten in den Zwischenspeicher zu erkennen, und bei Erkennung eines Endes eine kumulierte Eigenschaft der in dem Zwischenspeicher gespeicherten Wertdokumente, insbesondere deren Wert zu ermitteln. Die kumulierte Eigenschaft ist dabei eine Eigenschaft, die in Abhängigkeit von wenigstens einer Eigenschaft aller zwischengespeicherten Wertdokumente ermittelt wird. Vorzugsweise kann die kumulierte Eigenschaft gespeichert oder mittels einer Ausgabeeinrichtung ausgegeben werden. Dies erlaubt es insbesondere, für mehrere Banknoten, beispielsweise einen Stapel von Banknoten bei Verwendung eines Vereinzlers deren Wert automatisch zu ermitteln. Zur Erkennung des Endes des Transports kann in dem Zwischenbereich, insbesondere dem Zwischenspeicher, und/oder an dem Transportpfad wenigstens ein Sensor zur Erkennung eines Vorbeitransports eines Wertdokuments, beispielsweise eine Lichtschranke vorgesehen sein.

Gemäß einer weiteren bevorzugten Weiterbildung kann bei der Vorrichtung in dem Zwischenbereichsgehäuse eine Ausgabeöffnung vorgesehen sein, durch die Wertdokumente zu einem Ausgabefach ausgebbar sind, aus dem sie entnehmbar sind. Dabei ist der Zwischenspeicher bewegbar und eine Umlenkeinrichtung mit dem Zwischenspeicher verbunden. Weiter ist die Steuereinrichtung dazu ausgebildet, für den Betrieb in einem Zählmodus den Zwischenspeicher so zu bewegen, daß Wertdokumente durch die erste Öffnung in die Umlenkeinrichtung und von dort in die Ausgabeöffnung transportierbar sind, und den Wert der durch die Ausgabeöffnung ausgegebenen Wertdokumente zu ermitteln und auszugeben. Diese Weiterbildung erlaubt es, in vorteilhafter Weise die Vorrichtung auch nur zur Ermittlung des Wertes von Wertdokumenten zu nutzen, wozu nur sehr geringer Zusatzaufwand notwendig ist. Dieses Konzept ist auch auf Vorrichtungen zur Bearbeitung von Wertdokumenten anwendbar, bei denen das Zwischenbereichsgehäuse nicht getrennt von einer Bearbeitungsbereichsabdeckung geöffnet werden kann. Gegenstand der Erfindung ist daher auch eine Vorrichtung zur Bearbeitung von Wertdokumenten, insbesondere Banknoten, mit einer Prüfungseinrichtung zur Prüfung von Wertdokumenten auf wenigstens eine Eigenschaft eines Wertdokuments gemäß wenigstens einem vorgegebenen Kriterium, insbesondere einem Echtheitskriterium, mit einer in einem Bearbeitungsbereich angeordneten Sensoreinrichtung zur Erfassung der Eigenschaft, in einem Zwischenbereich angeordneten relativ zu der Prüfeinrichtung bewegbaren Zwischenspeicher zur Zwischenspeicherung wenigstens von Wertdokumenten, deren Eigenschaft bei einer Prüfung durch die Prüfungseinrichtung das Kriterium erfüllt, einer in dem Bearbeitungsbereich angeordneten Transporteinrichtung zum Transport von der Vorrichtung zugeführten Wertdokumenten zu der Prüfungseinrichtung und von dieser zu dem Zwischenspeicherbereich, einer einen Endspeicherbereich wenigstens teilweise umschließenden Endspeichereinrichtung zur Aufnahme wenigstens eines Sicherheitsbehälters zur Speicherung von Wertdokumenten aus dem Zwischenspeicherbereich, wobei eine Umlenkeinrichtung mit dem Zwischenspeicher verbunden ist. Die Vorrichtung umfaßt weiter eine Steuereinrichtung, die dazu ausgebildet, für den Betrieb in einem Zählmodus den Zwischenspeicher so zu bewegen, daß Wertdokumente in die Umlenkeinrichtung und von dort in die Ausgabeöffnung transportierbar sind, und den Wert der durch die Ausgabeöffnung ausgegebenen Wertdokumente zu ermitteln und auszugeben und für den Betrieb in einem Speichermodus den Zwischenspeicher so zu bewegen, daß in dem Zwischenspeicher gespeicherte Wertdokumente durch wenigstens die zweite Öffnung in den Endspeicherbereich auszugeben.

Weiter kann es bevorzugt sein, daß bei der Vorrichtung der durch die Transporteinrichtung gegebene Transportpfad einen Zweig aufweist, entlang dessen Wertdokumente ohne Zwischenspeicherung in dem Zwischenspeicher in die Endspeichereinrichtung transportierbar sind. Dies hat den Vorteil, daß die Vorrichtung auch zum schnellen Transport von Wertdokumenten in Sicherheitsbehälter verwendet werden kann.

Es kann nicht völlig ausgeschlossen werden, daß in der Vorrichtung Störungen beim Transport der Wertdokumente auftreten. Daher ist es bevorzugt, daß die Vorrichtung eine Signaleinrichtung zur Anzeige des Ortes entlang eines durch die Transporteinrichtung bestimmten Transportpfades wenigstens zum Zwischenspeicher, bei dem das Auftreten eines Transportfehlers erkannt wurde, aufweist. Die Vorrichtung kann zur Erkennung der Störung entlang des Transportpfades jeweils Wertpapiersensoren aufweisen, die ein Signal abgegeben, wenn sie ein Wertdokument in dem Transportpfad erkennen. Durch Verfolgung der Signale kann dann der Ort der Störung ermittelt werden. Dies erlaubt in vorteilhafter Weise eine schnelle Erkennung von Störungsquellen. Beispielsweise kann die Signaleinrichtung dazu eine Anzeigeeinrichtung umfassen, auf der der Transportpfad und der Ort der Störung wenigstens schematisch anzeigbar sind. Alternativ kann angezeigt werden, ob die Störung in dem Bearbeitungsbereich oder dem Zwischenbereich aufgetreten ist.

Es ist jedoch besonders bevorzugt, daß die Signaleinrichtung wenigstens zwei entlang des Transportspfades angeordnete Lichtquellen aufweist, und daß die Steuereinrichtung so ausgebildet und mit der Signaleinrichtung verbunden ist, daß bei Erkennung des Ortes einer Störung diejenige der Lichtquellen, die dem Ort der Störung am nächsten ist, in einen anderen bzw. neuen Betriebszustand versetzt, insbesondere eingeschaltet, wird. Dies erlaubt es Bedienpersonal, nach Öffnen des entsprechenden Bereichs unmittelbar den Ort einer Störung erkennen zu können.

Weiterhin ist es bevorzugt, daß an wenigstens einem Ausgabefach zur Ausgabe von Wertdokumenten, das frei zugänglich ist, eine über eine Signalverbindung mit der Steuereinrichtung verbundene Entnahmesignaleinrichtung mit wenigstens einer Lichtquelle angeordnet ist, und daß die Steuereinrichtung dazu ausgebildet ist, die Entnahmesignaleinrichtung so anzusteuern, daß die Lichtquelle eingeschaltet wird, wenn dem Ausgabefach in dieses ausgegebene Wertdokumente zu entnehmen sind.

Die Erfindung wird im Folgenden noch weiter beispielhaft anhand der Zeichnungen erläutert. Es zeigen:
- Fig.1: eine schematische Seitenansicht einer Banknotenbearbeitungsvorrichtung nach einer bevorzugten Ausführungsform der Erfindung in Form einer Banknoteneinzahlungsvorrichtung mit geschlossener Bearbeitungsbereichsabdeckung und geschlossenem Zwischenbereichsgehäuse,
- Fig. 2: eine schematische Seitenansicht der Banknoteneinzahlungsvorrichtung in Fig.1 bei geöffneter Bearbeitungsbereichsabdeckung und geschlossenem Zwischenbereichsgehäuse,
- Fig. 3: eine schematische Seitenansicht der Banknoteneinzahlungsvorrichtung in Fig.1 bei geschlossener Bearbeitungsbereichsabdeckung und geöffnetem Zwischenbereichsgehäuse,
- Fig. 4: eine schematische Seitenansicht einer Banknotenbearbeitungsvorrichtung nach einer weiteren bevorzugten Ausführungsform der Erfindung in Form einer Banknoteneinzahlungsvorrichtung mit geschlossener Bearbeitungsbereichsabdeckung und geschlossenem Zwischenbereichsgehäuse,
- Fig. 5: eine schematische Seitenansicht einer Banknotenbearbeitungsvorrichtung nach noch einer weiteren bevorzugten Ausführungsform der Erfindung in Form einer Banknoteneinzahlungsvorrichtung mit geschlossener Bearbeitungsbereichsabdeckung und geschlossenem Zwischenbereichsgehäuse,
- Fig. 6a und b: schematische teilweise Darstellungen einer Transporteinrichtung und eines Zwischenspeichers mit einer Umlenkeinrichtung einer Benknotenbearbeitungsvorrichtung nach einer weiteren bevorzugten Ausführungsform der Erfindung, in denen sich der Zwischenspeicher und die Umlenkeinrichtung jeweils in verschiedenen Stellung befinden, und
- Fig. 7: eine schematische Seitenansicht einer Banknoteneinzahlungsvorrichtung, bei der statt eines Zwischenspeichers eine Umlenkeinrichtung mit Weiche vorgesehen ist.

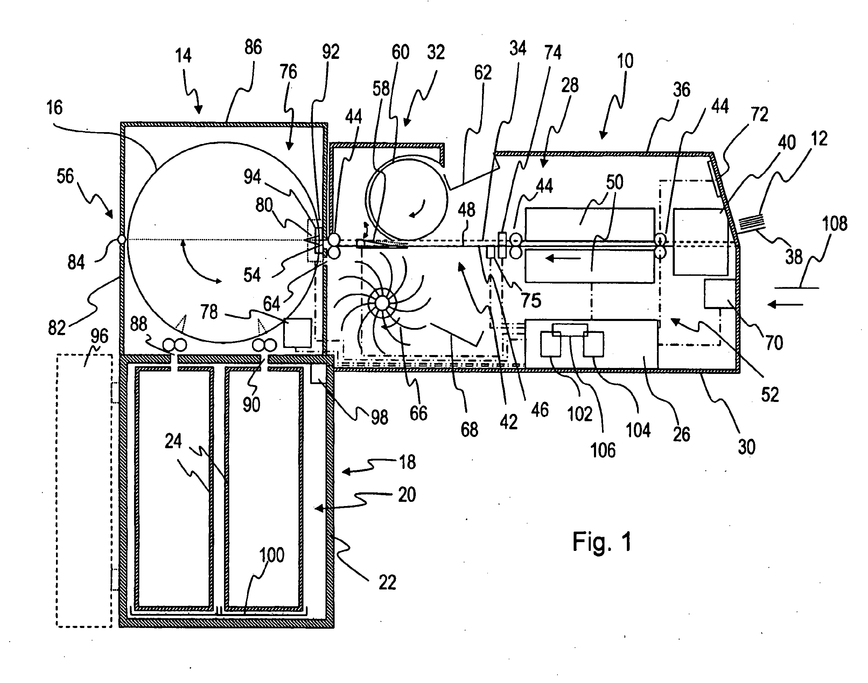

Eine Wertpapierbearbeitungsvorrichtung nach einer bevorzugten Ausführungsform der Erfindung in Fig.1 in Form einer Banknotenbearbeitungsvorrichtung umfaßt einen Bearbeitungsabschnitt 10 zur Eingabe von Wertdokumenten, im Beispiel Banknoten 12, einzeln oder in Form eines Stapels, zur Bearbeitung der Wertdokumente 12 und zur Ausgabe bearbeiteter Wertdokumente in Abhängigkeit von einem Ergebnis der Bearbeitung, einen Zwischenspeicherabschnitt 14 zur Zwischenspeicherung von bearbeiteten Wertdokumenten in einem Zwischenspeicher 16, einen Tresorabschnitt 18 mit einem einen Endspeiclierbereich 20 umschließenden Endspeichereinrichtung in Form eines Tresors 22 zur Aufnahme von Sicherheitsbehältern 24 in Form von Kassetten in dem Endspeicherbereich 20 und eine Steuereinrichtung 26 zur Steuerung der Vorrichtung, die in diesem Beispiel physisch dem Bearbeitungsabschnitt zugeordnet ist.

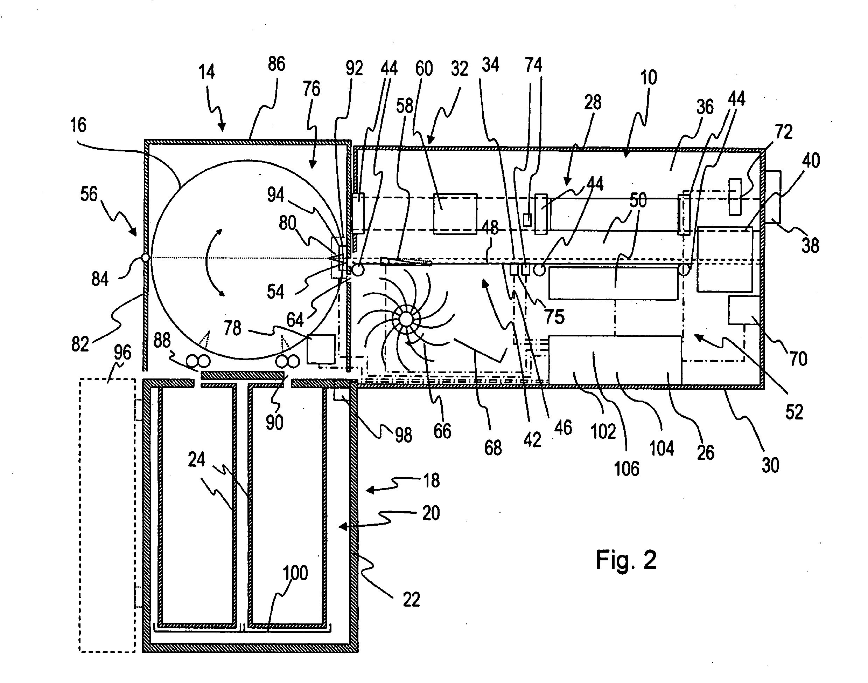

Der Bearbeitungsabschnitt 10 verfügt über ein einen Bearbeitungsbereich 28 umschließendes Gehäuse mit einem Gehäuseunterteil 30 und eine Bearbeitungsbereichsabdeckung 32, die ein über ein stabiles Scharnier 34 an dem Gehäuseunterteil 30 angelenktes Abdeckungselement 36 aufweist, das durch Schwenkbewegungen zwischen einer Schließstellung, in der der Bearbeitungsbereich 28 abgedeckt ist (vgl. Fig. 1), und einer Öffnungsstellung, in der für eine Bedienperson ein Zugriff auf den Bearbeitungsbereich 28 möglich ist (vgl. Fig. 2), hin- und herbewegbar ist, und die den Bearbeitungsbereich 28 abdeckt, wenn sich das Abdeckungselement 36 in der Schließstellung befindet.

Zur Zuführung von Wertdokumenten 12, insbesondere in Form eines Stapels, ist ein Eingabefach 38 in bzw. an dem Abdeckungselement 36 angeordnet. Wertdokumente 12 in dem Eingabefach 38 werden im Betrieb über einen Vereinzler 40 der Vorrichtung in dem Gehäuseunterteil 32 vereinzelt. Die vereinzelten Wertdokumente 12 werden dann mittels einer Transporteinrichtung 42, die im Beispiel unter anderem über wenigstens einen nicht in den Figuren gezeigten Antrieb, Transport- bzw. Antriebswalzen 44 und zwischen und/ oder um die Transport- bzw. Antriebswalzen 44 geführte Transportbänder bzw. Riemen 46 verfügt, entlang eines Transportpfades 48 von dem Vereinzler 40 an einer in dem Bearbeitungsbereich 28 angeordneten Sensoreinrichtung 50 einer Prüfungseinrichtung 52 zur Prüfung von Wertdokumenten, d.h. hier Banknoten, vorbei bzw. durch diese hindurch bis zu einer ersten Öffnung 54 in einem Zwischenbereichsgehäuse 56 transportiert.

Die Prüfungseinrichtung 50 dient zur Prüfung mehrerer Eigenschaften eines Wertdokuments bzw. einer Banknote gemäß vorgegebener Teilkriterien eines Echtheitskriteriums, und verfügt hierzu über die über Signalverbindungen mit der Steuereinrichtung 26 verbundene Sensoreinrichtung 50, die beidseitig des Transportpfades 48 angeordnet ist und zur Erfassung der Eigenschaften über entsprechende in den Figuren nicht gezeigte Sensorelemente verfügt, die bei der Erfassung der Eigenschaften entsprechende Sensorsignale erzeugen, die in einer Beurteilungseinrichtung der Steuereinrichtung 26 verarbeitet werden.

Entlang des Transportpfades 48 nach der Sensoreinrichtung 50 ist eine über elektrische Weichensignale schaltbare Zungenweiche 58 angeordnet, mittels derer in Abhängigkeit von den Weichensignalen Wertdokumente aus dem Transportpfad 48 über eine Ausgabetransporteinrichtung 60 einem ersten Ausgabefach 62 in dem Bearbeitungsbereich 28 zugeführt werden können, das über eine Öffnung bzw. einen Schacht in dem Abdeckungselement 36 zugänglich ist.

Damit ergibt sich insgesamt ein im Wesentlichen geradliniger Verlauf des Transportpfades von dem Vereinzler 40 zu der ersten Öffnung 54 in dem Zwischenbereichsgehäuse 56. Insbesondere ist der durch die Transporteinrichtung bestimmte Transportpfad zu der Öffnung 54 ungefaltet, was das Risiko des Auftretens von Transportstörungen in dem Bearbeitungsbereich deutlich herabsetzt.

Eine in dem Bearbeitungsbereich 28 vor einer Ausgabeöffnung 64 des Zwischenbereichsgehäuses 56 angeordnete Stapekadanordnung 66 dient zur Ausgabe vereinzelter Wertdokumente in ein zweites Ausgabefach 68.

In dem Bearbeitungsbereich 28 ist weiter die Steuereinrichtung 26 angeordnet, die unter anderem über Signalverbindungen mit einer Zugriffsdatenerfassungseinrichtung 70 in Form eines Chip-Kartenlesers und einer Datenein-und -ausgabeeinrichtung 72 in Form eines berührungsempfindlichen Anzeigefeldes bzw. Touchscreens in dem Abdeckungselement 36 verbunden ist.

Zur Verriegelung des Abdeckungselements 36 in der Schließstellung ist in dem Bearbeitungsbereich 28 weiter eine erste über eine Signalverbindung mit der Steuereinrichtung 26 verbundene, durch Verriegelungssignale steuerbare Verriegelungseinrichtung 74 angeordnet, die in diesem Beispiel auch zur Bewegung des Abdeckungselements 36 aus einer zwischen der Öffnungs- und der Schließstellung liegenden, vorgegebenen Freigabestellung in die Schließstellung dient. Die Verriegelungseinrichtung besitzt einen an dem Gehäuseunterteil 30 gehaltenen Aktor, genauer einen Schrittmotor, mit einer Gewindewelle, genauer einer Trapezspindel, und ein an dem Abdeckungselement 36 gehaltenes oder in diesem ausgebildetes, zu der Gewindewelle komplementäres Gewindeelement, im Beispiel eine an dem Abdeckungselement befestigte Mutter oder ein Innengewinde in dem Abdeckungselement 36. In einem anderen Ausführungsbeispiel können die Lagen des Aktors mit der Gewindewelle und des komplementären Gewindeelements auch vertauscht sein. Die Gewindewelle steht soweit über den Rand des Gehäuseunterteils 30 hervor, daß das Abdeckungselement 36 in der Freigabestellung nicht auf dem Gehäuseunterteil 30 aufliegt, d.h. das Gehäuse geschlossen ist, und das komplementäre Gewindeelement nur auf der Gewindewelle aufliegt, so daß das Abdeckungselement 36 manuell in die Öffnungsstellung bewegt werden kann. Zur Bewegung des Abdeckungselements 36 in die Schließstellung wird dieses zunächst manuell in die Freigabelage bewegt, deren Erreichen mittels eines geeigneten Sensors, beispielsweise einer Lichtschranke, detektiert wird. Bei Erreichen der Freigabelage und Empfang entsprechender Verriegelungssignale dreht der Aktor die Gewindewelle, sodaß die Gewinde der Gewindewelle und des komplementären Gewindeelements ineinander greifen und das Abdeckungselement 36 gegen das Gehäuseunterteil 30 gezogen wird. Bei Erreichen der Schließstellung wird der Aktor abgeschaltet, wodurch das Abdeckungselement 36 in der Schließlage verriegelt wird. Zum Öffnen wird der Aktor in umgekehrter Richtung betrieben, bis das Abdeckungselement die Freigabelage erreicht hat. Zur Überwachung der Stellung des Abdeckungselements 36, genauer zur Überwachung, ob sich das Abdeckungselement 36 in der Schließstellung befindet, dient eine Überwachungseinrichtung bzw. Stellungserfassungseinrichtung, die in diesem Beispiel ein nur in der Schließstellung betätigtes Schaltelement 75, hier einen durch Bewegung des Abdeckungselements 36 in die oder aus der Schließstellung betätigbaren, über eine Signalverbindung mit der Steuereinrichtung 26 verbundenen Unterbrecher 75, aufweist.

Der Zwischenspeicherabschnitt 14 umfaßt das einen Zwischenbereich 76 umschließende Zwischenbereichsgehäuse 56, dem in dem Zwischenbereich 76 angeordneten Zwischenspeicher 16, im Beispiel einen Wickelspeicher, der durch einen über eine Signalverbindung mit der Steuereinrichtung 26 verbundenen Stellantrieb 78 relativ zu dem Zwischenbereichsgehäuse 56, bewegbar, im Beispiel drehbar ist, sowie in den Figuren der Übersichtlichkeit halber nicht dargestellte Transportelemente zum Transport von Wertdokumenten 12 von einer Ein- und Ausgabeöffnung 80 in dem Zwischenspeicher 16 in den Bearbeitungsbereich 28 oder den Tresorabschnitt 18 oder aus dem Bearbeitungsbereich 28 in die Ein- und Ausgabeöffnung 80 des Zwischenspeichers 16.

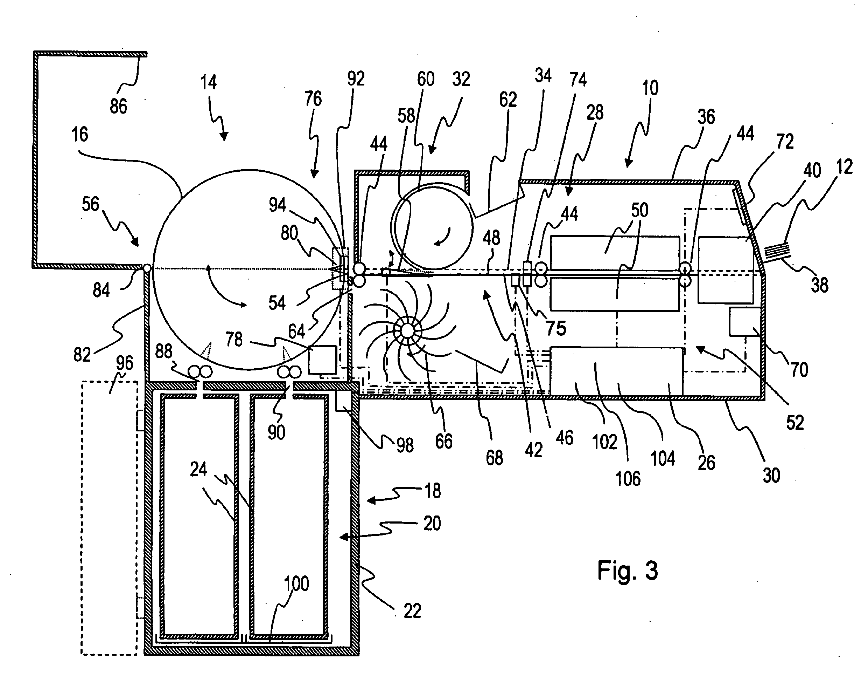

Das Zwischenbereichsgehäuse 56 wird durch einen Abschnitt des Tresors 22, Seitenwände 82 und ein über ein stabiles Scharnier 84 bewegbar, insbesondere schwenkbar an einer der Seitenwände 82 gehaltenes Zwischenbereichsgehäuseelement 86 gebildet, das zwischen einer in Fig. 1 gezeigten Schließstellung und einer in Fig. 3 gezeigten Öffnungsstellung, in der der Zwischenspeicher durch einen Zugriffsbereich, hier der Bereich über der Öffnung des Zwischenspeichergehäuseunterteils gebildet durch den Abschnitt des Tresors 22 und die Seitenwände 82, zugänglich ist, hin- und herbewegbar ist.

Durch das Zwischenbereichsgehäuseelement 86 und eine der Seitenwände 82, die diesem gegenübersteht, wird die erste Öffnung 54 in dem Zwischenbereichsgehäuse 56 gebildet, durch die Wertdokumente zwischen dem Zwischenbereich 76 und dem Bearbeitungsbereich 28 hin- und hertransportierbar sind.

In dem Zwischenbereichsgehäuse 86, genauer der oberen Wand des Tresors 22, sind eine zweite Öffnung 88 und eine weitere Öffnung 90 ausgebildet, durch die Wertdokumente aus dem Zwischenbereich 76 in den von dem Tresor 22 umschlossenen Endspeicherbereich 20 transportierbar sind. Die Breite der schlitzförmigen Öffnungen 88 und 90 ist so gewählt, daß diese den automatischen Transport von Wertdokumenten, im Beispiel Banknoten, durch sie hindurch erlauben, ein manueller Zugriff aus dem Endspeicherbereich 20 auf den Zwischenspeicher 16 bzw. aus dem Zwischenbereich 76 auf den Endspeicherbereich 20 zur Entnahme von Wertdokumenten jedoch nicht oder jedenfalls nicht ohne besondere Werkzeuge möglich ist. Im Beispiel weisen sie eine Breite von etwa 7 mm auf.

In dem Zwischenbereichsgehäuse 86, genauer der dem Bearbeitungsbereich 28 zugewandten Seitenwand 82, ist die Ausgabeöffnung 64 ausgebildet, durch die Wertdokumente aus dem Zwischenspeicher 16 zu der Staplerradanordnung 66 transportierbar sind. Wie die Öffnungen 88 und 90 ist die Breite der schlitzförmigen Ausgabeöffnung 64 so gewählt, daß diese den automatischen Transport von Wertdokumenten, im Beispiel Banknoten, durch sie hindurch erlaubt, ein manueller Zugriff aus dem Bearbeitungsbereich 28 auf den Zwischenspeicher 16 zur Entnahme von Wertdokumenten jedoch nicht oder jedenfalls nicht ohne besondere Werkzeuge möglich ist. Im Beispiel weist auch sie eine Breite von etwa 7 mm auf.

In der Schließstellung schließt das Zwischenbereichsgehäuseelement 86 das Zwischenbereichsgehäuse 56 bis auf die Öffnungen 54 und 64 zu dem Bearbeitungsbereich und die Öffnungen 88 und 90 zu dem Endspeicherbereich 20 ab, so daß Zugriffe von Personen auf den Zwischenbereich 76 und insbesondere den Zwischenspeicher 16 wenigstens zur Entnahme von Wertdokumenten von außen verhindert werden. In der Öffnungsstellung dagegen können Personen auf den Zwischenspeicher 16 zugreifen.

Zur Verriegelung des Zwischenbereichsgehäuseelements 86 in der Schließstellung dient eine elektrisch über Verriegelungssignale betätigbare Verriegelungseinrichtung 92, im Beispiel ein an der Seitenwand 82 gehaltener Elektromagnet, der mit einem magnetisierbaren Element an dem Zwischenbereichsgehäuseelement 86 zusammenwirkt. Zur Übermittlung der Signale ist die Verriegelungseinrichtung 92 über eine Signalverbindung mit der Steuereinrichtung 26 verbunden.

Der Zwischenspeicher 16 selbst ist in dem Zwischenbereichsgehäuse 56 so drehbar gelagert, daß er dem Zwischenbereichsgehäuse 56 einfach entnommen werden kann, wenn sich das Zwischenbereichsgehäuseelement 86 in der Öffnungsstellung befindet.

Weiter befindet sich an der ersten Öffnung 54 ein Hinterkantensensor 94 zur Erkennung einer in Bezug auf die Transportrichtung in den Zwischenspeicher 16 hinteren Kante eines Wertdokuments und Ausgabe eines entsprechenden Hinterkantenerkennungssignals an die Steuereinrichtung 26. In diesem Ausführungsbeispiel umfaßt der Hinterkantensensor 94 dazu eine Lichtschranke mit einem Sender und einem Empfänger. Der Transportpfad von der ersten Öffnung 54 zu dem Zwischenspeicher 16 liegt im Detektionsbereich der Lichtschranke zwischen dem Sender und dem Empfänger. Eine Detektionsschaltung des Hinterkantensensors 94 erkennt, wenn der Empfänger nach einer unbeleuchteten Phase erstmals wieder durch den Sender beleuchtet wird, wie es bei Passieren eines Wertdokuments an dessen hinterer Kante auftritt, und gibt dann das Hinterkantenerkennungssignal aus.

Der Tresor 22 zur sicheren Aufbewahrung der Sicherheitsbehälter 24 eines vorgegebenen Typs verfügt über ein zwischen einer Öffnungsstellung und einer Schließstellung hin- und herbewegbares, über ein Scharnier angelenktes Schließelement 96, im Beispiel eine Tür, durch die in deren Öffnungsstellung Sicherheitsbehälter 24 in den Endspeicherbereich 20 gebracht bzw. diesem entnommen werden können. In der Schließstellung, im Beispiel in den Figuren einer Stellung, in der das Schließelement 96 in der Zeichenebene liegt, dagegen ist der Tresor 22 bis auf die Öffnungen 88 und 90 geschlossen und gegen Zugriffe gesichert. Zur Verriegelung des Schließelements 96 in der Schließstellung dient eine mit der Steuereinrichtung 26 über eine Verriegelungssignalverbindung verbundene elektrische Tresorverriegelungseinrichtung 98, im Beispiel einen elektrisch ansteuerbaren Aktor und von diesem bewegbare Riegelbolzen, die über Verriegelungssignale der Steuereinrichtung 26 betätigbar ist.

Zur Sicherstellung einer für den Transport von Wertdokumenten aus dem Zwischenspeicher 16 in die Sicherheitsbehälter 82 geeigneten Lage von Sicherheitsbehältern in dem Tresor 22 besitzt dieser eine Positioniereinrichtung 100 mit Führungen zur Aufnahme der Sicherheitsbehälter 24 in einer vorgegebenen Lage relativ zu dem Tresor 22 und damit zu den Öffnungen 88 und 90. Die Positioniereinrichtung 100 und die Öffnungen 88 und 90 sind in Abstimmung mit den Sicherheitsbehältern 24 so angeordnet und ausgebildet, daß in dem Fall, daß die Sicherheitsbehälter 24 in der Positioniereinrichtung 100 angeordnet sind, Wertdokumente durch die Öffnungen 88 und 90 in jeweils einen der Sicherheitsbehälter 24 transportierbar sind. Die Vorrichtung kann natürlich auch mit nur einem Sicherheitsbehälter betrieben werden.

Die Steuereinrichtung 26 dient zur Steuerung der Vorrichtung und verfügt, hierzu neben Schnittstellen zu den einzelnen zu steuernden Komponenten der Vorrichtung und Sensoren über einen Speicher 102, in dem unter anderem ein Computerprogramm mit Instruktionen abgelegt ist, und einen Prozessor 104, der bei Ausführung der Instruktionen die im folgenden geschilderten Funktionen bzw. Verfahrensschritte ausführt.

Die Steuereinrichtung 26 in Verbindung mit dem Schaltelement bzw. Unterbrecher 75 verkörpert in diesem Ausführungsbeispiel insbesondere auch eine Stellungserfassungseinrichtung zur Erfassung einer Bewegung des Abdeckungselements 36 in die Schließstellung, genauer des Erreichens der Schließstellung. Dazu werden durch Bewegung des Abdeckungselements 36 aus der Schließstellung oder in die Schließstellung ausgelöste Signale des Unterbrechers 75 erfaßt und in Abhängigkeit von den erfaßten Signalen ein entsprechendes Datum in dem Speicher 102 gespeichert bzw. gelöscht. Die Steuereinrichtung 26 ist weiter dazu ausgebildet, in Abhängigkeit von Daten in der Stellungserfassungseinrichtung, d.h. hier dem Unterbrecher 75 in Verbindung mit der Steuereinrichtung 26 den Stellantrieb 78 so anzusteuern, daß ein Transport zwischen dem Zwischenspeicher 16 und dem Bearbeitungsbereich 28 möglich ist oder nicht.

In diesem Beispiel umfaßt die Steuereinrichtung 26 noch eine in Fig.1 schematisch durch ein Rechteck dargestellte Zugriffssteuereinrichtung 106, die von der Erfassungseinrichtung 70 für Zugriffsdaten und die Datenein- und - ausgabeeinrichtung 72 erfaßte Signale bzw. Daten zur Erkennung von Zugriffsberechtigungen für den Bearbeitungsbereich 28, den Zwischenbereich 76 und den Endspeicherbereich 20 bzw. den Tresor 22 verwendet.

In der Zugriffssteuereinrichtung 106, genauer einem Bereich des Speichers 102, sind als erste und zweite Zugriffsdaten Identifikationsdaten für Benutzer, die den Benutzern jeweils eindeutig zugeordnet sind, und einen den ersten Zugriffsdaten zugeordneten Code und den ersten Zugriffsdaten zugeordneten Zugriffsberechtigungsdaten, die wiedergeben, zu welchem der Bereiche der Vorrichtung der Benutzer Zugriff haben soll, gespeichert.

Jeder Benutzer der Vorrichtung verfügt über eine Chip-Karte 108 zur Identifizierung seiner Person gegenüber der Vorrichtung. Die Chip-Karte 108 enthält, vorzugsweise in verschlüsselter Form, die ersten Zugriffsdaten in Form der Identifikationsdaten für den jeweiligen Benutzer.

In diesem Ausführungsbeispiel sind drei Gruppen von Bedienpersonen vorgesehen. Die erste Gruppe hat nur Zugriff auf den Bearbeitungsbereich 28, nicht aber den Zwischenbereich 76 oder den Endspeicherbereich 20, die zweite Gruppe hat Zugriff sowohl auf den Bearbeitungsbereich 28 als auch den Zwischenbereich 76, nicht aber den Endspeicherbereich 20, und die dritte Gruppe schließlich hat nur Zugriff auf den Endspeicherbereich 20, nicht aber den Bearbeitungsbereich 28 oder den Zwischenbereich 76. Typische Bedienpersonen der ersten Gruppe können beispielsweise Kassierer oder Kassiererinnen sein, die an einer Kasse eingenommenes Geld zum Transport durch ein Werttransportunternehmen einzahlen. Bedienpersonen der dritten Gruppe können beispielsweise Personen des Werttransportuntemehmens sein, die die Sicherheitsbehälter 82 mit darin gespeicherten Wertdokumenten, hier Banknoten, aus dem Tresor 22 entnehmen und, beispielsweise zu einer Geschäftsbank oder einem sog. Cash-Center, abtransportieren. Personen der zweiten Gruppe können beispielsweise besonders vertrauenswürdige Personen sein, die in der Bedienung der Vorrichtung so geschult sind, daß sie einfache Wartungsarbeiten an der Vorrichtung, insbesondere die Beseitigung einer Transportstörung, durchführen können.

Die Vorrichtung arbeitet in folgender Weise.

Zunächst erfolgt eine Anmeldung einer Bedienperson an der Vorrichtung, bei der auch eine Prüfung auf die Zugriffsberechtigung auf die Vorrichtung geprüft wird.

Dazu führt die Zugriffssteuereinrichtung 106 auf der Basis von Zugriffsdaten eine Prüfung durch, ob vorgegebene Zugriffskriterien erfüllt sind. Hier werden zwei Kriterien geprüft. Zum einen wird geprüft, ob die ersten Zugriffsdaten, d.h. die Identifikationsdaten, mit gespeicherten Identifikationsdaten übereinstimmen. Zum anderen wird geprüft, ob von der Bedienperson zweiten Zugriffsdaten mit dem den Identifikationsdaten zugeordneten Code übereinstimmen. Nur dann wird der Bedienperson eine Benutzung der Vorrichtung und, je nach Bedienperson, der Zugriff auf verschiedene Bereiche der Vorrichtung erlaubt.

Eine Bedienperson führt also zunächst ihre Chip-Karte 108 in die Erfassungseinrichtung 70 ein, die daraufhin die Zugriffsdaten auf der Chip-Karte 108 erfaßt und entsprechende Zugriffssignale an die Zugriffssteuereinrichtung 106, im Beispiel realisiert durch einen entsprechenden Teil der Steuereinrichtung 26, abgibt. Hier wird als Zugriffskriterium ermittelt, ob die ersten Zugriffsdaten einer autorisierten Person zugeordnet sind. Weiter fragt die Zugriffssteuereinrichtung 106 über die Datenein- und -ausgabeeinrichtung 72 einen den erfaßten Zugriffsdaten zugeordneten Code als zweite Zugriffsdaten ab. Die Bedienperson gibt ihren Code über die Datenein- und -ausgabeeinrichtung 72 in die Zugriffssteuereinrichtung 106 ein, die den mittels der Datenein- und -ausgabeeinrichtung 72 erfaßten Code mit dem den erfaßten ersten Zugriffsdaten entsprechenden zweiten Zugriffsdaten, d.h. dem Code, vergleicht. Bei Übereinstimmung der Daten, wird der Bedienperson ein Datensatz zugeordnet, der unter anderem Datum und Uhrzeit enthält und im weiteren Verlauf der Bedienung durch Daten über die Bedienung ergänzt wird. Weiter wird entsprechend den in dem Speicher 102 gespeicherten Daten ermittelt, auf welche der Bereiche die Bedienperson Zugriff hat, und es werden entsprechende Daten temporär gespeichert.

Die Steuereinrichtung 26 fragt nun über die Datenein- und -ausgabeeinrichtung 72 ab, welche von mehreren möglichen Betriebsarten die Bedienperson nutzen möchte. Die Steuereinrichtung liest dann entsprechende, von der Bedienperson eingegebene Daten über die Datenein- und -ausgabeeinrichtung 72 ein und steuert die Vorrichtung zum Betrieb in dem gewählten Betriebsmodus an.

Der im Folgenden geschilderte erste Betriebsmodus dient zur Einzahlung von Wertdokumenten in die Sicherheitsbehälter 24 unter gleichzeitiger Feststellung des Wertes der Wertdokumente, im Beispiel Banknoten. Diese Betriebsart läßt die Steuereinrichtung 26 nur für Bedienpersonen zu, die der ersten oder zweiten Gruppe angehören.

Die Steuereinrichtung 26 prüft dann, ob sich der Zwischenspeicher 16 mit seiner Ein- und Ausgabeöffnung 80 in einer Eingabestellung vor der ersten Öffnung 54 befindet, so daß Banknoten durch diese Öffnung in den Zwischenspeicher 16 transportiert werden können. Ist dies nicht der Fall steuert sie den Stellantrieb 78 so an, daß der Zwischenspeicher 16 mit seiner Ein-und Ausgabeöffnung 80 in die Eingabestellung gedreht wird.

Die Bedienperson legt einen Stapel von Wertdokumenten 12 in das Eingabefach 38. Die Steuereinrichtung 26 fragt über die Datenein- und -ausgabeeinrichtung 72 den Start der Einzahlung ab. Bei Erfassung eines entsprechenden Signals steuert sie die Transporteinrichtung 42 und den Vereinzler 40 so an, daß die Banknoten 12 des Stapels einzeln in den Transportpfad gefördert werden, wo sie von der Transporteinrichtung 42 entlang des Transportpfades 48 zunächst durch die Sensoreinrichtung 50 geführt werden. Diese erfaßt für jede Banknote in an sich bekannter Weise Eigenschaften, unter Bildung entsprechender Signale. Diese werden in diesem Ausführungsbeispiel in einer Auswerteeinrichtung ausgewertet, die durch die Steuereinrichtung 26 realisiert ist, in deren Speicher 102 für diese Funktion entsprechende Instruktionen für den Prozessor 104 gespeichert sind.

Auf der Basis der Signale der Sensoreinrichtung 50 wird in bekannter Weise festgestellt, welche Denomination die geprüfte Banknote hat, ob sie gemäß wenigstens einem Echtheitskriterium, beispielsweise der Abwesenheit von Fluoreszenz bei Bestrahlung mit UV-Strahlung, als echt erkannt wird, und ob sie als umlauffähig gilt.

Erkennt die Steuereinrichtung 26 bei der Prüfung auf Echtheit und Umlauffähigkeit, daß die Banknote gemäß dem geprüften Kriterium nicht echt und/oder nicht umlauffähig ist oder auch im Transportpfad schräg gegen die vorgesehene Transportrichtung orientiert ist, steuert sie die Zungenweiche 58 so an, daß die Banknote von der Ausgabetransporteinrichtung 60 in das erste Ausgabefach 60 transportiert wird.

Andernfalls steuert sie die Zungenweiche 58 so an, daß die Banknote durch die erste Öffnung 54 in den Zwischenspeicher 16, der sich in der Eingabestellung befindet, transportiert und dort gespeichert wird.

Während des Vorgangs erfaßt der Hinterkantensensor 94 dauernd, ob gerade eine bezüglich der Transportrichtung hintere Kante einer Banknote seinen Detektionsbereich passiert hat und gibt in diesem Fall ein entsprechendes Signal an die Steuereinrichtung 26 aus, die daraufhin die Lage der Banknote in der Folge der in dem Zwischenspeicher 16 gespeicherten Banknoten und den Wert der Banknote entsprechend der Denomination speichert.

Der Vereinzler 40 prüft während der Einzahlung mittels einer Erkennungseinrichtung, ob noch eine Banknote einzuziehen ist. Ist dies nicht mehr der Fall, gibt er ein Signal an die Steuereinrichtung 26 aus. Wenn die letzte Banknote geprüft und entweder in das erste Ausgabefach 62 oder den Zwischenspeicher 16 transportiert wurde" fragt die Steuereinrichtung 26 über die Datenein- und -ausgabeeinrichtung 72 ab, ob noch weitere Banknoten eingezahlt werden sollen. Ist dies der Fall, wird der Einzug wie zuvor beschrieben fortgesetzt. Andernfalls bewegt, d.h. hier dreht, die Steuereinrichtung 26 nach Empfang des entsprechenden Benutzersignals von der Datenein- und -ausgabeeinrichtung 72 den Zwischenspeicher 16 in eine von zwei Ausgabestellungen, die in Fig.1 durch gestrichelte Linien angedeutet sind. In der ersten bzw. zweiten Ausgabestellung befindet sich die Ein- und Ausgabeöffnung 80 des Zwischenspeichers 16 vor der zweiten Öffnung 88 bzw. der weiteren Öffnung 90, so daß eine aus dem Zwischenspeicher 16 geförderte Banknote durch die zweite Öffnung bzw. die weitere Öffnung 90 ohne die Verwendung einer Weiche in den entsprechenden Sicherheitsbehälter 82 gefördert werden kann.

Im Folgenden sind beispielhaft drei Alternativen dafür beschrieben, wie die Steuereinrichtung 50 die gespeicherten Wertdokumente auf die Sicherheitsbehälter 24, genauer deren Fächer, verteilt.

Zur Erläuterung einer ersten Alternative wird zur Vereinfachung des Beispiels davon ausgegangen, daß entsprechend der Anzahl der Sicherheitsbehälter 24 nur zwei Denominationen eingelesen werden.
Die Steuereinrichtung 26, in der die Speicherreihenfolge der Banknoten in dem Zwischenspeicher 16 gespeichert ist, ermittelt gemäß dem FILO-Speicherprinzip des hier als Zwischenspeicher 16 verwendeten Wickelspeichers die nächste in einen der Sicherheitsbehälter 24 auszugebende Banknote in dem Zwischenspeicher 16 und deren Denomination und bewegt durch Ansteuerung des Stellantriebs 78 entsprechend der ermittelten Denomination den Zwischenspeicher 16 in die erste oder zweite Ausgabestellung, in der dann die jeweilige Banknote in den entsprechenden Sicherheitsbehälter 24 ausgegeben wird.

Bei einer zweiten Alternative ist in der Steuereinrichtung 50 eine Maximalanzahl der in einen der Sicherheitsbehälter 24 ausgebbaren Wertdokumente gespeichert. Die Steuereinrichtung 50 steuert den Stellantrieb 78 so an, daß zunächst Wertdokumente nur durch eine der Öffnungen 88 oder 90 in den entsprechenden Sicherheitsbehälter 24 transportiert werden und erfaßt die Anzahl der seit Einsetzen der dann leeren Sicherheitsbehälter 24 in die Vorrichtung in diesen Sicherheitsbehälter transportierten Wertdokumente. Sie führt dauernd einen Vergleich der Anzahl der in den Sicherheitsbehälter transportierten Wertdokumente mit der Maximalanzahl durch. Nur wenn sie erkennt, daß die Maximalzahl erreicht wurde, steuert sie den Stellantrieb 78 so an, daß der Zwischenspeicher 16 mit seiner Ein- und Ausgabeöffnung 80 vor die zuletzt nicht benutzte Öffnung gedreht wird, so daß in der Folge der andere Sicherheitsbehälter 24 mit in dem Zwischenspeicher 16 gespeicherten Wertdokumenten gefüllt werden kann. Auf diese Weise braucht ein Werttransportunternehmen nur seltener zum Abtransport der Wertdokumente gerufen zu werden, was die Verfügbarkeit der Vorrichtung erhöht.

Bei einer dritten Alternative sind die Sicherheitsbehälter 24 jeweils unterschiedlichen Organisation zugeordnet, beispielsweise der Sicherheitsbehälter 24 unter der Öffnung 88 der Organisation A und der Sicherheitsbehälter 24 unter der Öffnung 90 der Organisation B. Bei der Identifikation der einzahlenden Person ermittelt die Steuereinrichtung 26 durch Einlesen entsprechender die Organisation identifizierender Daten oder unter Verwendung einer Tabelle, in der für jeden zugelassenen Benutzer eine Kennung für die jeweilige Organisation gespeichert ist, die Organisation für die der Benutzer Wertdokumente einzahlt und steuert den Stellantrieb 78 so an, daß der Zwischenspeicher 16 mit seiner Ein- und Ausgabeöffnung 80 über die dem Sicherheitsbehälter für die entsprechende Organisation zugeordnete Öffnung 88 bzw. 90 und transportiert die Wertdokumente aus dem Zwischenspeicher 16 in den der jeweiligen Organisation zugeordneten Sicherheitsbehälter. Die Vorrichtung kann so von zwei ganz unterschiedlichen Organisationen gemeinsam genutzt werden, ohne daß die Gefahr einer falschen Zuordnung der eingezahlten Wertdokumente zu Organisationen bestünde. Eine solche Vorrichtung eignet sich beispielsweise besonders zum Einsatz in Einkaufszentren mit einer Vielzahl kleiner Geschäfte, die gemeinsam die Vorrichtung benutzen können.

Nach Leerung des Zwischenspeichers 16 wird der Wert der in die Sicherheitsbehälter 24 transportierten Banknoten ermittelt und der Bedienperson zugeordnet gespeichert. Der Wert kann auch über einen in den Figuren nicht gezeigten Drucker ausgegeben werden.

Bedingt durch Verwendung der beiden Öffnungen 88 und 90 zu dem Tresor 22 und der Drehbarkeit des Zwischenspeichers 16 sind in dem Endspeicherbereich 20 keine Weichen notwendig und vorgesehen, die zu Transportstörungen führen könnten.

Damit ist der normale Einzahlvorgang abgeschlossen.

Meint die Bedienperson, daß der erfaßte Wert nicht mit dem vermuteten Wert übereinstimmt, kann diese mittels einer Eingabe über die Datenein-und -ausgabeeinrichtung 72 die Steuereinrichtung 26 dazu veranlassen, in einen anderen Betriebsmodus zu wechseln. In diesem steuert die Steuereinrichtung 26 den Stellantrieb 78 so an, daß dieser den Zwischenspeicher 16 mit seiner Ein- und Ausgabeöffnung 80 vor die Ausgabeöffnung 64 dreht. Die Steuereinrichtung 26 veranlaßt dann den Zwischenspeicher 16, alle darin befindlichen Wertdokumente durch die Ausgabeöffnung 64 der Stapelradanordnung 66 zuzuführen, mittels derer die gespeicherten Wertdokumente in das zweite Ausgabefach 68 gestapelt werden können. Der gespeicherte Wert und eine eventuell erfolgte Gutschrift werden dann gelöscht.

Bei dem normalen Einzahlvorgang können, wie eingangs bemerkt, Störungen bei dem Transport auftreten, die die Steuereinrichtung 26 anhand von Signalen entsprechender, in den Figuren nicht gezeigter Sensoren entlang des Transportpfades, beispielsweise Lichtschranken, in bekannter Weise erkennt. Beim Füllen des Zwischenspeichers 16, d.h. beim Transport von dem Eingabefach 38 entlang des Transportpfades 48 können im Bereich des Vereinzlers 40, der Sensoreinrichtung 50 und der Zungenweiche 58 Störungen auftreten. Die Sensoren sind an solchen Positionen angeordnet, an denen das größte Risiko von Störungen besteht, beispielsweise hinter dem Vereinzler, vor der Zungenweiche 58 und vor der ersten Öffnung 54.

Erkennt die Steuereinrichtung 26 eine Störung, so wechselt sie in einen weiteren Betriebsmodus und gibt über die Datenein- und -ausgabeeinrichtung 72 eine Anzeige für das Auftreten einer Störung und in einer schematischen Darstellung des Transportpfades den Ort der Störung sowie eine Aufforderung zur Beseitigung der Störung aus. Gleichzeitig betätigt die Steuereinrichtung 26 die Verriegelungseinrichtung 74, so daß diese eine Bewegung des Abdeckungselements 36 in die Öffnungsstellung erlaubt. In diesem Ausführungsbeispiel wird dazu der Antrieb so angesteuert, daß das Abdeckungselement 36 durch die Verriegelungseinrichtung 74 entriegelt wird, so daß es in die Öffnungsstellung bewegt werden kann, die Bedienperson Zugriff auf den Bearbeitungsbereich 28 erhält und die Störung beseitigen kann.

Bei der Erkennung des Öffnungsbefehls speichert die Steuereinrichtung 26 als Stellungserkennungseinrichtung ein entsprechendes Datum in ihrem Speicher 102. Bei Vorhandensein dieses Datums steuert sie den Stellantrieb 78 so an, daß der Zwischenspeicher 16 in eine Schutzstellung gedreht wird, in der die Ein- und Ausgabeöffnung 80 nicht vor einer der Öffnungen in dem Zwischenbereichsgehäuse 56 angeordnet und damit ein Zugriff aus dem Bearbeitungsbereich 28 durch die erste Öffnung 54 oder die Ausgabeöffnung 64 auf den Zwischenspeicher 16 nicht möglich ist.

Die Steuereinrichtung 26 fordert nach dem Erreichen der Öffnungsstellung über die Datenein- und -ausgabeeinrichtung 72 zum Schließen des Abdekkungselements 36 auf. Gleichzeitig überwacht sie die Stellungserfassungseinrichtung, genauer den Unterbrecher 75, daraufhin, ob sich das Abdekkungselement 36 in der Schließstellung befindet. Nachdem das Abdeckungselement 36 in die Schließstellung bewegt wurde und damit der Unterbrecher 75 unter Abgabe eines entsprechenden Signals betätigt wurde, empfängt die Steuereinrichtung 50 das Signal und steuert nach Auswertung des Signals die erste Verriegelungseinrichtung 74 so an, daß das Abdeckungselement 36 in der Schließstellung verriegelt wird. Weiter löscht sie das Datum aus dem Speicher 102 und steuert den Stellantrieb 78 so an, daß dieser den Zwischenspeicher 16 in eine Eingabestellung dreht, in der ein Transport von Banknoten aus dem Bearbeitungsbereich 28 durch die erste Öffnung 54 in den Zwischenspeicher möglich ist.

Danach setzt die Steuereinrichtung 26 automatisch die Bearbeitung der Banknoten fort.

Weiter können Störungen im Zwischenbereich 76 auftreten. Bei Erkennung einer solchen Störung durch die Steuereinrichtung 26 wechselt diese in einen weiteren Betriebsmodus und stoppt die Transporteinrichtung 42, so daß keine weiteren Wertdokumente in den Zwischenbereich 76 befördert werden. Da zur Störungsbeseitigung eine Bewegung des Zwischenbereichsgehäuseelements 86 in die Öffnungsstellung notwendig und damit der Zwischenspeicher 16 zugänglich ist, speichert die Steuereinrichtung die erfaßten Daten über die in dem Zwischenspeicher 16 gespeicherten Wertdokumente ab und zeigt auf der Datenein- und -ausgabeeinrichtung 72 den Ort der Störung an.

Nun kann sich eine Person, die der dritten Gruppe angehört, in der Bedienperson entsprechenden Weise anmelden. Nach der Anmeldung kann sie den durch eine entsprechende Eingabe in die Datenein- und -ausgabeeinrichtung 72 die Steuereinrichtung 26 dazu anzuweisen, die Verriegelungseinrichtung 92 zu betätigen, so daß das Zwischenbereichsgehäuseelement 86 in die Öffnungsstellung bewegt werden kann. Es besteht nun Zugriff auf den gesamten Zwischenbereich 76 und die Person kann ein die Störung verursachendes Wertdokument entnehmen und/ oder den Zwischenspeicher 16 austauschen.

Nach Beseitigung der Störung kann die Person das Zwischenbereichsgehäuseelement 86 in die Schließstellung bewegen und durch Betätigung der Datenein- und -ausgabeeinrichtung 72 die Steuereinrichtung 26 dazu veranlassen, mittels der Verriegelungseinrichtung 92 das Zwischenbereichsgehäuseelement 86 in der Schließstellung zu verriegeln.

Die Vorrichtung kann nach Beseitigung der Störung normal weiterbetrieben werden.

Zum Entnehmen der Sicherheitsbehälter 24 kann sich eine Person der zweiten Gruppe analog zu den oben genannten Personen bei der Vorrichtung anmelden, die wie oben die Zugriffsberechtigung prüft und einen weiteren Betriebsmodus wechselt.

Die Steuereinrichtung 26 fragt über die Datenein- und -ausgabeeinrichtung 72 ab, ob das Schließelement 96 des Tresors 22 in seine Öffnungsstellung bewegt werden soll. Bei einer entsprechenden Eingabe steuert die Steuereinrichtung 26 die Verriegelungseinrichtung 98 so an, daß das zuvor durch die Verriegelungseinrichtung 98 verriegelte Schließelement 96 entriegelt wird und in die Öffnungsstellung bewegt werden kann. In diesem Zustand ist eine Bewegung des Abdeckungselements 36 oder das Zwischenbereichsgehäuseelements 86 aus der jeweiligen Schließstellung heraus durch die entsprechenden Verriegelungseinrichtungen nicht möglich.

Weiter steuert die Steuereinrichtung den Stellantrieb 78 so an, daß dieser den Zwischenspeicher 16 in die oben erwähnte Sicherungsstellung dreht, so daß aus dem Endspeicherbereich 20 nicht durch die Öffnungen 88 und 90 auf den Zwischenspeicher 16 zugegriffen werden kann.

Nach Entnahme der Sicherheitsbehälter 24 und Bewegung des Schließelements 96 in seine Schließstellung kann die Bedienperson eine von der Steuereinrichtung 26 über die Datenein- und -ausgabeeinrichtung 72 ausgeführte Abfrage, ob das Schließelement 96 verriegelt werden soll, durch eine Eingabe beantworten, auf die hin die Steuereinrichtung 26 die Verriegelungseinrichtung 98 so ansteuert, daß das Schließelement 96 in seiner Schließstellung verriegelt wird.

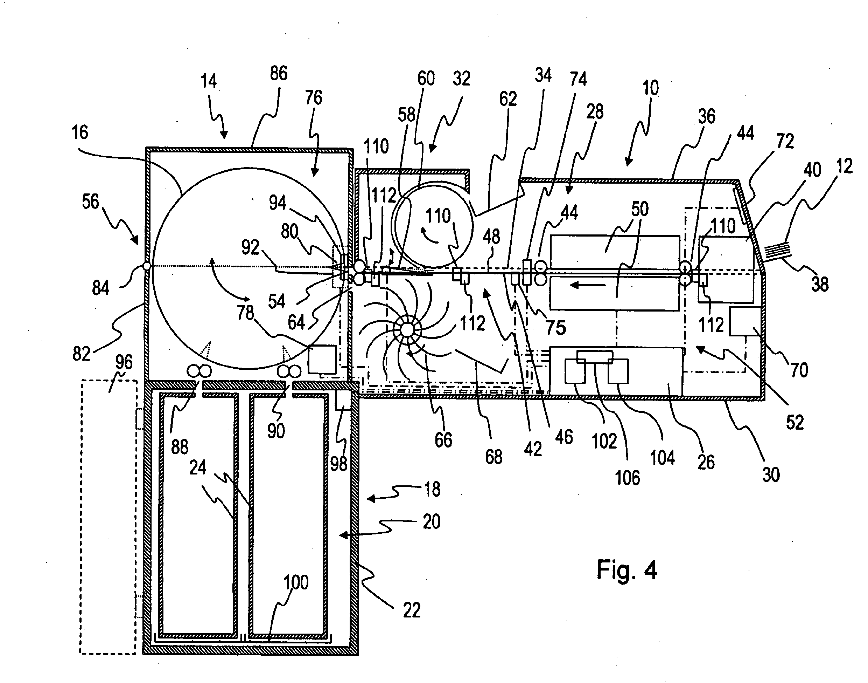

Eine andere bevorzugte Ausführungsform in Fig. 4 unterscheidet sich von dem ersten Ausführungsbeispiel nur darin, daß entlang des Transportpfades an Orten, an denen Sensoren 110, beispielsweise Lichtschranken, zur Erkennung von Transportstörungen angeordnet sind, Signaleinrichtungen 112, in diesem Beispiel Leuchtdioden, vorgesehen sind, die bei einer festgestellten Störung an dem jeweiligen Ort von der Steuereinrichtung 26 aktiviert werden. Nur der Übersichtlichkeit halber sind in Fig. 4 einige der Bezugszeichen in Fig. 1, die unveränderte Elemente bezeichnen, weggelassen. In Fig. 4 sind auch der Übersichtlichkeit halber nur einige der Signaleinrichtungen 112 eingezeichnet. Signaleinrichtungen 112 befinden sich unter anderem vor und hinter dem Vereinzler 40, an der Zungenweiche 58, vor der ersten Öffnung 54 und den Walzen 44, an dem ersten Ausgabefach 62, an der Stapelradanordnung 66 und an dem zweiten Ausgabefach 68. Zur Erkennung des Ortes einer Störung überwacht die Steuereinrichtung 26 entsprechende Signale der Sensoren 110 und aktiviert bei Erkennung einer Störung auf der Basis der Signale die am Ort des die Störung erfassenden Sensors angeordnete Signaleinrichtung 112. Auf diese Weise kann eine auch unerfahrene Bedienperson den Ort der Störung leicht auffinden und schnell beseitigen. Parallel kann der Ort der Störung auch auf der Datenein- und - ausgabeeinrichtung 72 angezeigt werden.

Weitere bevorzugten Ausführungsformen können sich von den zuvor geschilderten Ausführungsbeispielen darin unterscheiden, daß die Erfassungseinrichtung, d.h. der Chip-Kartenleser, durch einen Fingerabdruckssensor, ein Mikrophon oder Kamera ersetzt ist und die Steuereinrichtung 26 zur Auswertung der Daten über entsprechende Instruktionen eines Computerprogramms verfügt, bei deren Ausführung durch die Steuereinrichtung 26 die erfaßten Signale der Erfassungseinrichtung zur Erkennung eines Fingerabdrucks bzw. zur Erkennung einer Stimme bzw. zur Erkennung des Netzhauthintergrundes verwendet werden.

Weiterhin kann der Wert der eingezahlten Wertdokumente bzw. Banknoten bei Verwendung eines Chip-Karten-Schreib- und -lesegeräts statt des Chir-Karten-Lesers auf die eingeführte Chip-Karte geschrieben und dort gespeichert werden.

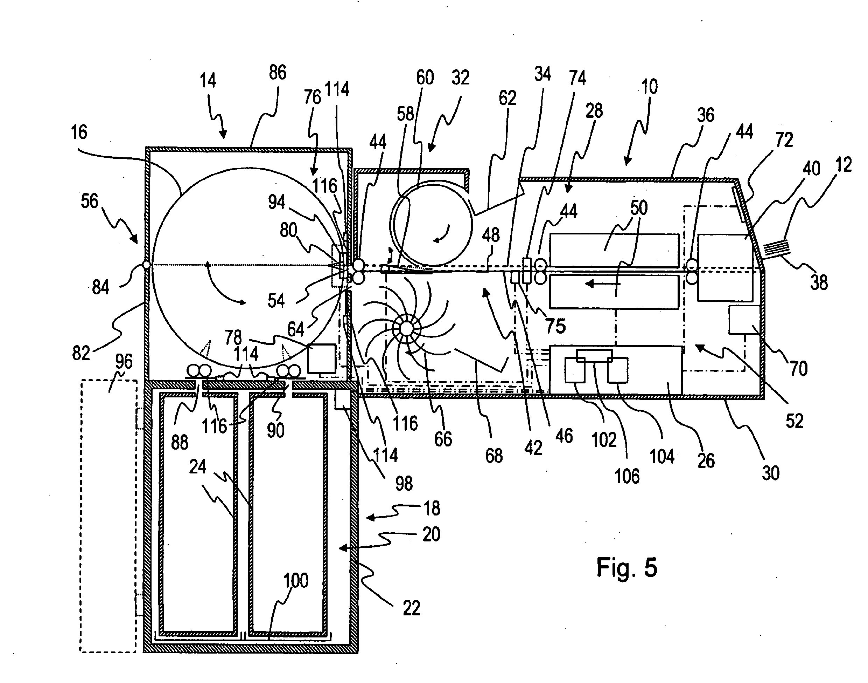

Eine weitere bevorzugte Ausführungsform unterscheidet sich von dem ersten Ausführungsbeispiel nur darin, daß vor den Öffnungen in dem Zwischenbereichsgehäuse 56 über Stellantriebe 114 bewegbare Verschlußelemente 116 des Zwischengehäuses 56 bzw. an dem Zwischengehäuse 56 angeordnet sind, die in den verschiedenen Betriebsmodi in einer Schließstellung die Öffnungen verschließen und in einer Öffnungsstellung freigeben. Dies ist in Fig. 5 veranschaulicht, in der einige der Bezugszeichen in Fig.1, die unveränderte Elemente bezeichnen, nur der Übersichtlichkeit halber weggelassen wurden.

Die Steuereinrichtung 26 ist dahingehend modifiziert, daß sie zum Verschließen bzw. Öffnen der Öffnungen in dem Zwischenbereichsgehäuse 56 nun nicht den Stellantrieb 98 für den Zwischenspeicher 16 ansteuert, sondern wenigstens einen der Stellantriebe 114.

Noch eine andere bevorzugte Ausführungsform unterscheidet sich von dem ersten Ausführungsbeispiel darin, daß zur Erfassung der Stellung des Abdeckungselements 36 in der Steuereinrichtung 26 bei Ausführung eines Öffnungs- oder Schließbefehls ein entsprechendes Zustandsdatum gesetzt wird, so daß die Steuereinrichtung 25 in diesem Fall bereits als Stellungserfassungseinrichtung dient. Der Antrieb ist vorzugsweise so ausgelegt, daß er gleichzeitig als Verriegelungseinrichtung dient

Die Vorrichtung kann auch mit nur einem Sicherheitsbehälter betrieben werden, wozu dann die Bewegung des Zwischenspeichers 16 entsprechend gesteuert wird.

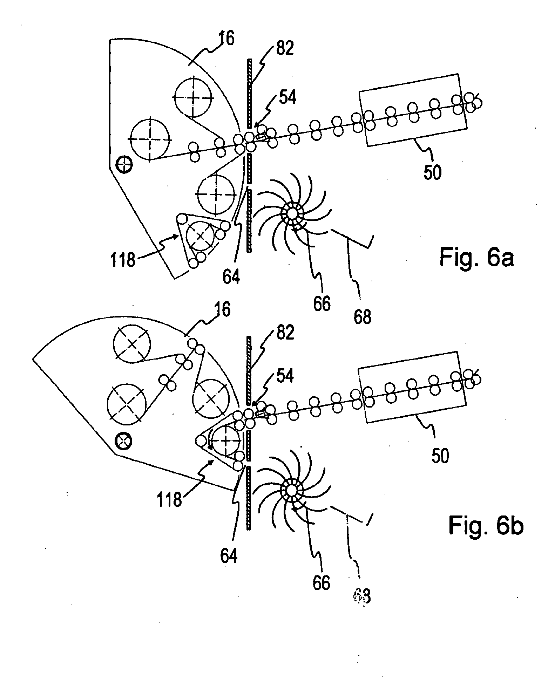

Eine weitere, teilweise in Fig. 6a und 6b gezeigte Ausführungsform unterscheidet sich von dem ersten Ausführungsbeispiel darin, daß mit dem Zwischenspeicher 16 eine Umlenkeinrichtung 118 zur Umlenkung von Wertdokumenten starr verbunden und damit mit diesem dreh- bzw. schwenkbar ist, daß der Abstand zwischen der ersten Öffnung 54 und der Ausgabeöffnung 64 und die Einlauf- und Auslaufwalzen der Umlenkeinrichtung 118 aufeinander abgestimmt sind, so daß Wertdokumente, im Beispiel die Banknoten, wie in Fig. 6b veranschaulicht, durch die erste Öffnung 54 in die Umlenkeinrichtung 118 transportiert, von dieser umgelenkt und durch die Ausgabeöffnung 64 über die Staplerradanordnung 66 in das zweite Ausgabefach 68 ausgegeben werden können. Weiter ist die Transporteinrichtung rein als Walzentransporteinrichtung ausgebildet. Schließlich unterscheidet sich die Steuereinrichtung 26 von der Steuereinrichtung des ersten Ausführungsbeispiels dadurch, daß diese nun dazu ausgebildet ist, für den Betrieb in einem Zählmodus den Zwischenspeicher 16 durch Ansteuerung des Antriebs 78 so zu bewegen, daß Wertdokumente durch die erste Öffnung 54 in die Umlenkeinrichtung 118 und von dort in die Ausgabeöffnung 64 transportierbar sind, und den Wert der in diesem Modus durch die Ausgabeöffnung 64 ausgegebenen Wertdokumente zu ermitteln und über die Datenein- und - ausgabeeinrichtung 72 auszugeben. Alle anderen Komponenten sind unverändert, so daß auch für diese die gleichen Bezugszeichen wie im ersten Ausführungsbeispiel verwendet werden und die Ausführungen dort entsprechend auch hier gelten.

Durch Eingabe entsprechender Befehle über die Datenein- und - ausgabeeinrichtung 72 kann ein Benutzer die Steuereinrichtung 26 in einen Einzahlmodus, in dem die Vorrichtung wie im ersten Ausführungsbeispiel beschrieben arbeitet, oder den Zählmodus versetzen.

Bei Auswahl des Zählmodus dreht die Steuereinrichtung 26 über Ansteuerung des Antriebs 78 den Zwischenspeicher 16 und damit die Umlenkeinrichtung 118 in eine Umlenkstellung, in der Banknoten durch die erste Öffnung 54 in die Umlenkeinrichtung 118 transportiert und von dieser in die Ausgabeöffnung 64 umgelenkt werden, von wo sie über die Staplerradanordnung 66 in das zweite Ausgabefach 68 gestapelt werden. Der Benutzer legt nun einen Stapel von Banknoten in das Eingabefach 38, von wo sie zur Prüfung an der vorbei Sensoreinrichtung 50 und bei erfolgreicher Prüfung über den beschriebenen Weg in das zweite Ausgabefach 68 transportiert werden. Bei der Prüfung werden die Denominationen der Banknoten ermittelt und in der Steuereinrichtung 26 aufsummiert. Nach Bearbeitung der letzten Banknote des Stapels gibt die Steuereinrichtung 26 den ermittelten Gesamtwert über die Datenein- und -ausgabeeinrichtung 72 aus.

Wählt der Benutzer dagegen den normalen Einzahlmodus, dreht die Steuereinrichtung 26 den Zwischenspeicher 16 in die in Fig. 6a gezeigte Speicherstellung, in der Banknoten durch die erste Öffnung 54 in die Ein- und Ausgabeöffnung 80 des Zwischenspeichers 16 transportiert werden können und führt das im Zusammenhang mit dem ersten Ausführungsbeispiel geschilderte Verfahren aus.

Die Vorrichtung ist daher nicht nur zur Einzahlung von Wertdokumenten bzw. Banknoten, sondern auch zum Zählen von Banknoten zu verwenden.

Bei noch einer anderen Ausführungsform kann der durch die Transporteinrichtung gegebene Transportpfad einen Zweig aufweisen, entlang dessen Wertdokumente ohne Zwischenspeicherung in dem Zwischenspeicher 16 in die Endspeichereinrichtung, d.h. den Tresor 22, bzw. die Sicherheitsbehälter 24 darin transportierbar sind. Dazu ist in dem Transportpfad hinter der Zungenweiche 58 eine weitere durch die Steuereinrichtung 26 ansteuerbare Weiche angeordnet, mittels derer wahlweise ein Transport über den zusätzlichen Zweig erfolgen kann.

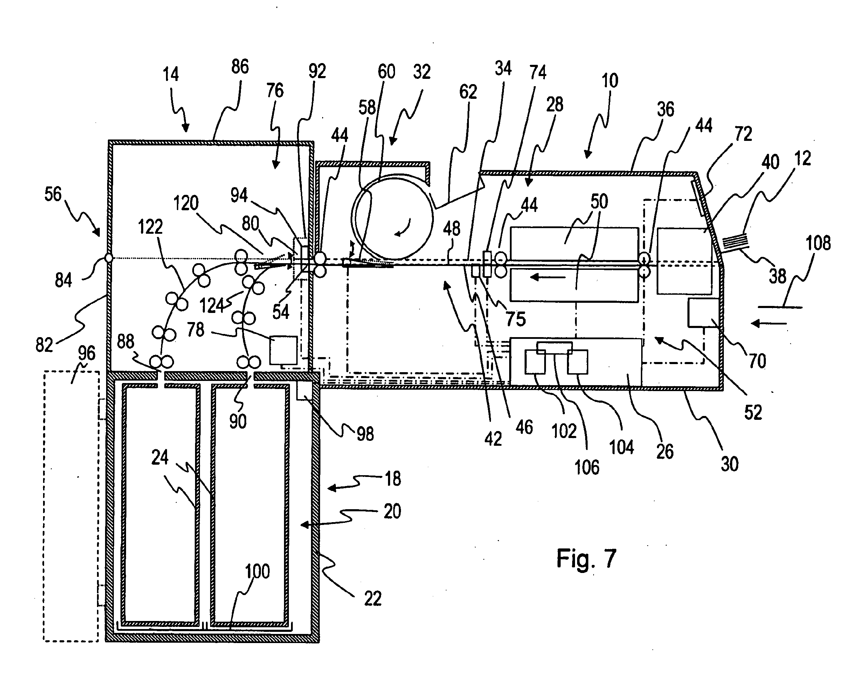

Eine weitere Ausführungsform in Fig. 7 unterscheidet sich von dem ersten Ausführungsbeispiel dadurch, daß statt des Zwischenspeichers 26 hinter dem Transportpfad bzw. der ersten Öffnung 54 eine Umlenkeinrichtung angeordnet ist, die eine mit der Steuereinrichtung 36 über eine Signalverbindung verbundene und von dieser über Weichensignale ansteuerbare Weiche 120 und zwei weitere von der Weiche 120 zu den Öffnungen 88 und 90 aus dem Zwischenbereich 76 in den Tresor 22 führende Transporteinrichtungen 122 und 124 in Form von Bogenstrecken besitzt. Die Ausgabeöffnung 64, die Stapelradanordnung 66 und das zweite Ausgabefach 68 fehlen. Die Steuereinrichtung ist nun zur Ansteuerung der Weiche 120 ausgebildet. Alle anderen Komponenten sind unverändert, so daß die gleichen Bezugszeichen für sie verwendet werden und die Erläuterungen zum ersten Ausführungsbeispiel auch hier gelten. In Abhängigkeit von der Authentisierung der einzahlenden Person oder des Füllgrades der Sicherheitsbehälter 24 steuert nun die Steuereinrichtung 26 die Umlenkeinrichtung, genauer die Weiche 120, im Beispiel eine Zungenweiche, so an, daß ihr zugeführte Wertdokumente bzw. Banknoten durch eine der weiteren Transporteinrichtungen 122 oder 124 durch die entsprechende Öffnung 88 bzw. 90 in den entsprechenden Sicherheitsbehälter 24 gefördert werden.

Bei noch einer anderen Ausführungsform ist die Umlenkeinrichtung des letzten Ausführungsbeispiels so als Modul ausgeführt, daß es statt des Zwischenspeichers §16 in der Vorrichtung des ersten Ausführungsbeispiels verwendet werden kann. Dies vereinfacht die Herstellung der Vorrichtung wesentlich, da nur die Software für die Steuereinrichtung 26 geändert zu werden braucht.

Bei allen beschriebenen Ausführungsbeispielen und auch allgemein im Rahmen der Erfindung kann die Vorrichtung so ausgebildet sein, daß die Wertdokumente mit der Richtung ihrer größten Ausdehnung parallel zur Transportrichtung transportiert werden (Längstransport), vorzugsweise erfolgt der Transport jedoch in Querrichtung, wobei die Wertdokumente mit der Richtung ihrer größten Ausdehnung bzw. Längsrichtung quer zur Transportrichtung transportiert werden, wozu die Vorrichtung dann entsprechend ausgebildet ist.

## Patentansprüche

1. Vorrichtung zur Bearbeitung von Wertdokumenten (12), insbesondere Banknoten, mit
einer Prüfungseinrichtung (52) zur Prüfung von Wertdokumenten (12) auf wenigstens eine Eigenschaft eines Wertdokuments (12) gemäß wenigstens einem vorgegebenen Kriterium, insbesondere einem Echtheitskriterium, mit einer in einem Bearbeitungsbereich (28) angeordneten Sensoreinrichtung (50) zur Erfassung der Eigenschaft,
einem in einem Zwischenbereich (76) angeordneten Zwischenspeicher (16) zur Zwischenspeicherung wenigstens von Wertdokumenten (12), deren Eigenschaft bei einer Prüfung durch die Prüfungseinrichtung (52) das Kriterium erfüllt,
einer in dem Bearbeitungsbereich (28) angeordneten Transporteinrichtung (42) zum Transport von der Vorrichtung zugeführten Wertdokumenten (12) zu der Prüfungseinrichtung (52) und von dieser zu dem Zwischenbereich (76),
einer einen Endspeicherbereich (20) wenigstens teilweise umschließenden Endspeichereinrichtung (22) zur Aufnahme wenigstens eines Sicherheitsbehälters (24) zur Speicherung von Wertdokumenten (12) aus dem Zwischenspeicher (16),
einem den Zwischenbereich (76) umschließenden Zwischenbereichsgehäuse (56), das eine erste Öffnung (54), durch die von der Prüfungseinrichtung (52) kommende Wertdokumente (12) dem Zwischenspeicher (16) zuführbar sind, eine zweite Öffnung (88), durch die Wertdokumente (12) aus dem Zwischenspeicher (16) in den Endspeicherbereich (20) transportierbar sind, und ein Zwischenbereichsgehäuseelement (86), das zwischen einer Öffnungsstellung, in der für eine Bedienperson ein Zugriff auf den Zwischenspeicher (16) durch einen Zugriffsbereich möglich ist, und einer Schließstellung, in der es den Zwischenbereich (76) gegen einen Zugriff einer Bedienperson durch den Zugriffsbereich wenigstens zur Entnahme von Wertdokumenten (12) schützt, hin und herbewegbar ist, aufweist, und
mit einer Verriegelungseinrichtung (92) zum Verriegeln des Zwischenbereichsgehäuseelements (86) in der Schließstellung,
wobei die Vorrichtung weiter so ausgebildet ist, daß der Zwischenspeicher (16) gegen einen Zugriff durch eine Bedienperson wenigstens zur Entnahme eines darin gespeicherten Wertdokuments (12) durch die erste Öffnung (54) geschützt ist, wenn sich das Zwischenbereichsgehäuseelement (86) in der Schließstellung befindet.

2. Vorrichtung zur Bearbeitung von Wertdokumenten (12), insbesondere Banknoten, mit
einer Prüfungseinrichtung (52) zur Prüfung von Wertdokumenten (12) auf wenigstens eine Eigenschaft eines Wertdokuments (12) gemäß wenigstens einem vorgegebenen Kriterium, insbesondere einem Echtheitskriterium, mit einer in einem Bearbeitungsbereich (28) angeordneten Sensoreinrichtung (50) zur Erfassung der Eigenschaft,
einer in einem Zwischenbereich (76) angeordneten Umlenkeinrichtung (120) zur Umlenkung wenigstens von Wertdokumenten (12), deren Eigenschaft bei einer Prüfung durch die Prüfungseinrichtung (52) das Kriterium erfüllt,
einer in dem Bearbeitungsbereich (28) angeordneten Transporteinrichtung (42) zum Transport von der Vorrichtung zugeführten Wertdokumenten (12) zu der Prüfungseinrichtung (52) und von dieser zu dem Zwischenbereich (76),
einer einen Endspeicherbereich (20) wenigstens teilweise umschließenden Endspeichereinrichtung (22) zur Aufnahme wenigstens eines Sicherheitsbehälters (24) zur Speicherung von Wertdokumenten (12) aus dem Zwischenbereich (76),
einem den Zwischenbereich (76) umschließenden Zwischenbereichsgehäuse (56), das eine erste Öffnung (54), durch die von der Prüfungseinrichtung (52) kommende Wertdokumente (12) der Umlenkeinrichtung (120) zuführbar sind, eine zweite Öffnung (88), durch die Wertdokumente (12) von der Umlenkeinrichtung (120) in den Endspeicherbereich (20) transportierbar sind, und ein Zwischenbereichsgehäuseelement (86), das zwischen einer Öffnungsstellung, in der für eine Bedienperson ein Zugriff auf die Umlenkeinrichtung (120) durch einen Zugriffsbereich möglich ist, und einer Schließstellung, in der es den Zwischenbereich (76) gegen einen Zugriff einer Bedienperson durch den Zugriffsbereich wenigstens zur Entnahme von Wertdokumenten (12) schützt, hin und herbewegbar ist, aufweist, und
mit einer Verriegelungseinrichtung (92) zum Verriegeln des Zwischenbereichsgehäuseelements (86) in der Schließstellung,
wobei die Vorrichtung weiter so ausgebildet ist, daß die Umlenkeinrichtung (120) gegen einen Zugriff durch eine Bedienperson wenigstens zur Entnahme eines darin gespeicherten Wertdokuments (12) durch die erste Öffnung (54) geschützt ist, wenn sich das Zwischenbereichsgehäuseelement (86) in der Schließstellung befindet.

3. Vorrichtung nach Anspruch 1 oder 2, die weiter eine Bearbeitungsbereichsabdeckung (32) mit einem Abdeckungselement (36) aufweist, das zwischen einer Schließstellung, in der der Bearbeitungsbereich (28) durch die Bearbeitungsbereichsabdeckung (32) abgedeckt ist, und einer Öffnungsstellung, in der für eine Bedienperson ein Zugriff auf den Bearbeitungsbereich (28) möglich ist, hin- und herbewegbar ist.

4. Vorrichtung nach einem der vorhergehenden Ansprüche, bei der die erste und/ oder zweite Öffnung (54, 88) die Form eines Schlitzes mit einer Breite von weniger als 9 mm aufweist.

5. Vorrichtung nach einem der vorhergehenden Ansprüche, bei der wenigstens in dem Fall, daß sich das Abdeckungselement (36) in der Öffnungsstellung und das Zwischenbereichsgehäuseelement (86) in der Schließstellung befinden, die erste Öffnung (54) so weit verschlossen ist, daß ein Wertdokument (12) nicht durch die erste Öffnung (54) transportiert werden kann.

6. Vorrichtung nach einem der vorhergehenden Ansprüche, bei der wenigstens ein Element in dem Zwischenbereichsgehäuse (56) oder dem Bearbeitungsbereich (28), ein Element des Zwischenbereichsgehäuses (56) und/oder der Zwischenspeicher (16) relativ zu dem Bearbeitungsbereich (28) zwischen einer ersten Stellung, in der Wertdokumente (12) durch die erste Öffnung (54) zwischen dem Zwischenspeicher (16) und dem Bearbeitungsbereich (28) transportierbar sind, und einer zweiten Stellung, in der wenigstens in dem Fall, daß sich das Abdeckungselement (36) in der Öffnungsstellung und das Zwischenbereichsgehäuseelement (86) in der Schließstellung befinden, ein Transport eines Wertdokuments (12) aus dem Zwischenspeicher (16) durch die erste Öffnung (54) zu dem Bearbeitungsbereich (28) verhindert wird, bewegbar ist.

7. Vorrichtung nach einem der vorhergehenden Ansprüche, die wenigstens eine Zugriffsdatenerfassungseinrichtung (70) zur Erfassung von Zugriffsdaten und wenigstens eine mit der Zugriffsdatenerfassungseinrichtung (70) über eine Signalverbindung verbundene Zugriffssteuereinrichtung (106) zur Prüfung erfaßter Zugriffsdaten auf die Erfüllung wenigstens eines vorgegebenen Zugriffskriteriums und zur Ansteuerung der Verriegelungseinrichtung (92) in Abhängigkeit von der Prüfung aufweist.

8. Vorrichtung nach einem der vorhergehenden Ansprüche, bei der wenigstens ein weiteres Element in dem Zwischenbereichsgehäuse (56), ein weiteres Element des Zwischenbereichsgehäuses (56) und/oder der Zwischenspeicher (16) relativ zu dem Endspeicherbereich (20) zwischen einer ersten Stellung, in der Wertdokumente (12) durch die zweite Öffnung (88) aus dem Zwischenspeicher (16) in den Endspeicherbereich (20) transportierbar sind, und einer zweiten Stellung, in der dies nicht möglich ist, hin- und herbewegbar ist.

9. Vorrichtung nach einem der vorhergehenden Ansprüche, bei der in dem Zwischenbereichsgehäuse (56) wenigstens eine weitere Öffnung (90) zu dem Endspeicherbereich (20) angeordnet ist, so daß durch die Öffnungen (88, 90) zu dem Endspeicherbereich (20) Wertdokumente (12) in wenigstens zwei Fächer eines vorgegebenen Sicherheitsbehälters (24) mit wenigstens zwei Fächern oder in wenigstens zwei vorgegebene Sicherheitsbehälter (24) in dem Endspeicherbereich (20) transportierbar sind.

10. Vorrichtung nach einem der vorhergehenden Ansprüche, die eine Steuereinrichtung (26) aufweist, die wenigstens eine bei der Prüfung durch die Prüfungseinrichtung (52) erkannte Eigenschaft von in dem Zwischenspeicher (16) zwischengespeicherten Wertdokumenten (12) erfaßt und speichert und vorzugsweise dazu ausgebildet ist, ein Ende des Transports von Wertdokumenten (12) in den Zwischenspeicher (16) zu erkennen, und bei Erkennung eines Endes eine kumulierte Eigenschaft der in dem Zwischenspeicher (16) gespeicherten Wertdokumente (12), insbesondere deren Wert zu ermitteln.

11. Vorrichtung nach Anspruch 10, die wenigstens einen Stellantrieb (78) zur Bewegung des wenigstens einen Elements in dem Zwischenbereichsgehäuse (56) oder des wenigstens einen Elements des Zwischengehäuses oder des Zwischenspeichers (16) und eine Stellungserfassungseinrichtung zur Erfassung einer Bewegung des Abdeckungselements (36) in die Öffnungsstellung und/ oder des Erreichens der Öffnungsstellung umfaßt, und bei der die Steuereinrichtung (26) dazu ausgebildet ist, in Abhängigkeit von Signalen der Stellungserfassungseinrichtung und/ oder Daten in der Stellungserfassungseinrichtung zur Erfassung einer Bewegung den Stellantrieb (78) so anzusteuern, daß ein Transport zwischen dem Zwischenspeicher (16) und dem Bearbeitungsbereich (28) möglich ist oder nicht.

12. Vorrichtung nach Anspruch 8 und Anspruch 10 oder 11, die zur Ausgabe von Wertdokumenten (12) einen Stellantrieb (78) zur Bewegung des weiteren Elements in dem Zwischenbereichsgehäuse (56) und/oder des Zwischenbereichsgehäuses (56) und/ oder des Zwischenspeichers (16) aufweist, und bei der die Steuereinrichtung (26) dazu ausgebildet ist, den Stellantrieb (78) so anzusteuern, daß in dem Zwischenspeicher (16) gespeicherte Wertdokumente (12) in Abhängigkeit von dem Füllstand in dem Sicherheitsbehälter (24) und/ oder in Abhängigkeit von in die Steuereinrichtung (26) eingegebenen Daten und/oder entsprechend ihrer gespeicherten Eigenschaft durch eine der Öffnungen zu dem Endspeicherbereich (20) transportierbar sind.

13. Vorrichtung nach einem der vorhergehenden Ansprüche, bei der der Zwischenspeicher (16) der Vorrichtung entnehmbar ist, wenn sich das Zwischenbereichsgehäuseelement (86) in der Öffnungsstellung befindet, und bei der der Zwischenspeicher (16) vorzugsweise einen Trommelspeicher oder einen Wickelspeicher umfaßt.

14. Vorrichtung nach Anspruch 13, bei der der Trommel- bzw. Wickelspeicher (16) dreh- oder schwenkbar gelagert ist.

15. Vorrichtung nach einem der vorhergehenden Ansprüche, bei der an oder in einem durch die Transporteinrichtung (42) bestimmten Transportpfad (48) wenigstens zum Zwischenspeicher (16) vor der Prüfungseinrichtung (52) ein Vereinzler (40) zum Vereinzeln in einem Stapel zugeführter Wertdokumente (12) angeordnet ist.

16. Vorrichtung nach einem der vorhergehenden Ansprüche, bei der ein durch die Transporteinrichtung (42) bestimmter Transportpfad (48) zu dem Zwischenbereich (76) ungefaltet verläuft.

17. Vorrichtung nach einem der vorhergehenden Ansprüche, die eine Signaleinrichtung (112) zur Anzeige des Ortes entlang eines Transportpfades (48) zu dem Zwischenspeicher (16), bei dem das Auftreten eines Transportfehlers erkannt wurde, aufweist und vorzugsweise wenigstens zwei entlang des Transportspfades (48) angeordnete Lichtquellen aufweist, und bei der die Steuereinrichtung (26) so ausgebildet und mit der Signaleinrichtung (112) verbunden ist, daß bei Erkennung des Ortes einer Störung diejenige der Lichtquellen, die dem Ort der Störung am nächsten ist, in einen anderen Betriebszustand versetzt wird.

18. Vorrichtung nach einem der Ansprüche 10 bis 12 oder nach einem der Ansprüche 13 bis 17 in Verbindung mit Anspruch 10, bei der in dem Zwischenbereichsgehäuse (56) eine Ausgabeöffnung (54) vorgesehen ist, durch die Wertdokumente (12) zu einem Ausgabefach ausgebbar sind, aus dem sie entnehmbar sind, bei der der Zwischenspeicher (16) bewegbar und eine Umlenkeinrichtung (118) mit dem Zwischenspeicher (16) verbunden ist, und bei der die Steuereinrichtung (26) dazu ausgebildet ist, für den Betrieb in einem Zählmodus den Zwischenspeicher (16) so zu bewegen, daß Wertdokumente (12) durch die erste Öffnung (54) in die Umlenkeinrichtung (118) und von dort in die Ausgabeöffnung (54) transportierbar sind, und den Wert der durch die Ausgabeöffnung (54) ausgegebenen Wertdokumente (12) zu ermitteln und auszugeben.

19. Vorrichtung nach einem der vorhergehenden Ansprüche, bei der der durch die Transporteinrichtung (42) gegebene Transportpfad einen Zweig aufweist, entlang dessen Wertdokumente (12) ohne Zwischenspeicherung in dem Zwischenspeicher (16) in die Endspeichereinrichtung (22) transportierbar sind.

## Claims

1. An apparatus for processing documents of value (12), in particular bank notes, with a checking device (52) for checking documents of value (12) for at least one property of a document of value (12) according to at least one predetermined criterion, in particular an authenticity criterion, with a sensor device (50) arranged in a processing area (28) for detecting the property,
an intermediate repository (16) arranged in an intermediate area (76) for intermediately storing at least documents of value (12) whose property fulfills the criterion in a check by the checking device (52),
a transport device (42) arranged in the processing area (28) for transporting documents of value (12) fed to the apparatus to the checking device (52) and from this to the intermediate area (76),
a final storage device (22) at least partially enclosing a final storage area (20) for accommodating at least one security container (24) for storing documents of value (12) from the intermediate repository (16),
an intermediate-area housing (56) enclosing the intermediate area (76) having a first opening (54), through which documents of value (12) coming from the checking device (52) can be fed to the intermediate repository (16), a second opening (88), through which documents of value (12) can be transported out of the intermediate repository (16) into the final storage area (20), and an intermediate-area housing element (86), which can be moved back and forth between an open position, in which an operator is enabled to access the intermediate repository (16) via an access area, and a close position, in which it protects the intermediate area (76) against access by an operator via the access area at least for the removal of documents of value (12), and
with a locking device (92) for locking the intermediate-area housing element (86) in the close position,
the apparatus being furthermore adapted in such a fashion that the intermediate repository (16) is protected against access by an operator at least for removing a document of value (12) stored therein through the first opening (54), when the intermediate-area housing element (86) is disposed in the close position.

2. An apparatus for processing documents of value (12), in particular bank notes, with a checking device (52) for checking documents of value (12) for at least one property of a document of value (12) according to at least one predetermined criterion, in particular an authenticity criterion, with a sensor device (50) arranged in a processing area (28) for detecting the property,
a diverting device (120) arranged in an intermediate area (76) for diverting at least documents of value (12) whose property fulfills the criterion in a check by the checking device (52),
a transport device (42) arranged in the processing area (28) for transporting documents of value (12) fed to the apparatus to the checking device (52) and from this to the intermediate area (76),
a final storage device (22) at least partially enclosing a final storage area (20) for accommodating at least one security container (24) for storing documents of value (12) from the intermediate area (76),
an intermediate-area housing (56) enclosing the intermediate area (76) having a first opening (54), through which documents of value (12) coming from the checking device (52) can be fed to the diverting device (120), a second opening (88), through which documents of value (12) can be transported from the diverting device (120) into the final storage area (20), and an intermediate-area housing element (86), which can be moved back and forth between an open position, in which an operator is enabled to access the diverting device (120) via an access area, and a close position, in which it protects the intermediate area (76) against access by an operator via the access area at least for the removal of documents of value (12), and
with a locking device (92) for locking the intermediate-area housing element (86) in the close position,
the apparatus being furthermore adapted in such a fashion that the diverting device (120) is protected against access by an operator at least for removing a document of value (12) stored therein through the first opening (54) when the intermediate-area housing element (86) is disposed in the close position.

3. The apparatus according to claim 1 or 2, further having a processing-area cover (32) with a cover element (36), which can be moved back and forth between a close position, in which the processing area (28) is covered by the processing-area cover (32), and an open position, in which an operator is enabled to access the processing area (28).

4. The apparatus according to any of the preceding claims, in which the first and/ or the second opening (54, 88) has the shape of a slot with a width of less than 9 mm.

5. The apparatus according to any of the preceding claims, in which, at least in the case that the cover element (36) is disposed in the open position and the intermediate-area housing element (86) is disposed in the close position, the first opening (54) is closed to such an extent that a document of value (12) cannot be transported through the first opening (54).

6. The apparatus according to any of the preceding claims, in which at least one element in the intermediate-area housing (56) or the processing area (28), one element of the intermediate-area housing (56) and/or the intermediate repository (16) can be moved relative to the processing area (28) between a first position, in which documents of value (12) are transportable through the first opening (54) between the intermediate repository (16) and the processing area (28), and a second position, in which, at least in the case that the cover element (36) is disposed in the open position and the intermediate-area housing element (86) is disposed in the close position, a transport of a document of value (12) out of the intermediate repository (16) through the first opening (54) to the processing area (28) is prevented.

7. The apparatus according to any of the preceding claims, having at least one access-data detection device (70) for detecting access data and at least one access control device (106) connected with the access-data detection device (70) via a signal connection for checking detected access data for the fulfillment of at least one predetermined access criterion and for controlling the locking device (92) in dependence of the check.

8. The apparatus according to any of the preceding claims, in which at least one further element in the intermediate-area housing (56), one further element of the ' intermediate-area housing (56) and/ or the intermediate repository (16) can be moved back and forth relative to the final storage area (20) between a first position, in which documents of value (12) are transportable through the second opening (88) out of the intermediate repository (16) into the final storage area (20), and a second position, in which this is not possible.

9. The apparatus according to any of the preceding claims, in which in the
intermediate-area housing (56) at least one further opening (90) to the final storage area (20) is arranged, so that through the openings (88, 90) to the final storage area (20) documents of value (12) can be transported into at least two pockets of a predetermined security container (24) with at least two pockets or into at least two predetermined security containers (24) in the final storage area (20).

10. The apparatus according any of the preceding claims, having a control device (26) which detects and stores at least one property of documents of value (12) intermediately stored in the intermediate repository (16) identified in a check by the checking device (52), and which is preferably adapted to identifying an end of the transport of documents of value (12) into the intermediate repository (16), and, upon identifying an end, to determining a cumulative property of the documents of value (12) stored in the intermediate repository (16), in particular their value.

11. The apparatus according to claim 10, comprising at least one actuating drive (78) for moving the at least one element in the intermediate-area housing (56) or the at least one element of the intermediate housing or the intermediate repository (16) and a position-detection device for detecting a movement of the cover element (36) into the open position and/or the reaching of the open position, and in which the control device (26) is adapted to controlling the actuating drive (78) in such a fashion that, in dependence of signals of the position-detection device and/ or data in the position-detection device for detecting a movement, a transport between the intermediate repository (16) and the processing area (28) is possible or not.

12. The apparatus according to claim 8 and claim 10 or 11, which, for outputting documents of value (12), has an actuating drive (78) for moving the further element in the intermediate-area housing (56) and/ or of the intermediate-area housing (56) and/ or of the intermediate repository (16), and in which the control device (26) is adapted to controlling the actuating drive (78) in such a fashion that documents of value (12) stored in the intermediate repository (16) are transportable through one of the openings to the final storage area (20) in dependence of the filling level in the security container (24) and/or in dependence of data input into the control device (26) and/ or corresponding to their stored property.

13. The apparatus according to any of the preceding claims, in which the intermediate repository (16) can be removed from the apparatus if the intermediate-area housing element (86) is disposed in the open position, and in which the intermediate repository (16) preferably comprises a drum repository or a winding repository.

14. The apparatus according to claim 13, in which the drum repository or winding repository (16) is mounted rotatably or pivotally.

15. The apparatus according to any of the preceding claims, in which a singler (40) for singling documents of value (12) fed in a stack is arranged upstream of the checking device (52) on or in a transport path (48) determined by the transport device (42) at least to the intermediate repository (16).

16. The apparatus according to any of the preceding claims, in which a transport path (48) determined by the transport device (42) extends in an unfolded fashion to the intermediate area (76).

17. The apparatus according to any of the preceding claims, having a signal device (112) for signaling the location along a transport path (48) to the intermediate repository (16) in which the occurrence of a transport error was detected, and having preferably at least two light sources arranged along the transport path (48), and in which the control device (26) is adapted and connected with the signal device (112) in such a fashion that, upon identifying the location of a disturbance, the light source which is closest to the location of the disturbance is switched to a different operating state.

18. The apparatus according to any of claims 10 to 12, or according to any of claims 13 to 17 in combination with claim 10, in which in the intermediate-area housing (56) an output opening (54) is provided, through which documents of value (12) can be output to an output pocket, from which they can be removed, in which the intermediate repository (16) is movable and a diverting device (118) is connected with the intermediate repository (16), and in which the control device (26) is adapted, for operation in a counting mode, to moving the intermediate repository (16) in such a fashion that documents of value (12) can be transported through the first opening (54) into the diverting device (118) and from there into the output opening (54), and to determining and outputting the value of the documents of value (12) output through the output opening (54).

19. The apparatus according to any of the preceding claims, in which the transport path provided by the transport device (42) has a branch along which documents of value (12) can be transported into the final storage device (22) without intermediate storage in the intermediate repository (16).

## Revendications

1. Dispositif de traitement de documents de valeur (12), notamment de billets de banque, comprenant
un équipement de vérification (52) pour la vérification de documents de valeur (12) quant à au moins une propriété d'un document de valeur (12) selon au moins un critère prédéterminé, notamment un critère d'authenticité, comprenant un équipement capteur (50) agencé dans une zone de traitement (28) et destiné à saisir la propriété,
un réservoir intermédiaire (16) agencé dans une zone intermédiaire (76) et destiné à stocker temporairement au moins des documents de valeur (12) dont la propriété correspond au critère lors d'une vérification effectuée par l'équipement de vérification (52),
un équipement de transport (42) agencé dans la zone de traitement (28) et destiné au transport de documents de valeur (12) introduits dans le dispositif à l'équipement de vérification (52) et de ce dernier à la zone intermédiaire (76),
un équipement de stockage terminal (22) enserrant au moins partiellement une zone de stockage terminal (20) et destiné à la réception d'au moins un contenant de sécurité (24) pour le stockage de documents de valeur (12) provenant du réservoir intermédiaire (16),
un boîtier de zone intermédiaire (56) enserrant la zone intermédiaire (76) et comportant une première ouverture (54) à travers laquelle des documents de valeur (12) provenant de l'équipement de vérification (52) sont acheminables au réservoir intermédiaire (16), une deuxième ouverture (88) à travers laquelle des documents de valeur (12) sont transportables du réservoir intermédiaire (16) à la zone de stockage terminal (20), et un élément de boîtier de zone intermédiaire (86) pouvant être mû en un mouvement de va-et-vient entre une position d'ouverture dans laquelle un accès au réservoir intermédiaire (16) est possible pour un opérateur par l'intermédiaire d'une zone d'accès et une position de fermeture dans laquelle il protège la zone intermédiaire (76) contre un accès d'un opérateur par l'intermédiaire d'une zone d'accès au moins pour ce qui est du prélèvement de documents de valeur (12), et
comprenant un équipement de verrouillage (92) destiné à verrouiller l'élément de boîtier de zone intermédiaire (86) dans la position de fermeture,
le dispositif étant en outre réalisé de telle manière que, quand l'élément de boîtier de zone intermédiaire (86) se trouve dans la position de fermeture, le réservoir intermédiaire (16) est protégé contre un accès d'un opérateur au moins pour ce qui est du prélèvement, par la première ouverture (54), d'un document de valeur (12) y étant stocké.

2. Dispositif de traitement de documents de valeur (12), notamment de billets de banque, comprenant
un équipement de vérification (52) pour la vérification de documents de valeur (12) quant à au moins une propriété d'un document de valeur (12) selon au moins un critère prédéterminé, notamment un critère d'authenticité, comprenant un équipement capteur (50) agencé dans une zone de traitement (28) et destiné à saisir la propriété,
un équipement de déviation (120) agencé dans une zone intermédiaire (76) et destiné à dévier au moins des documents de valeur (12) dont la propriété correspond au critère lors d'une vérification effectuée par l'équipement de vérification (52),
un équipement de transport (42) agencé dans la zone de traitement (28) et destiné au transport de documents de valeur (12) introduits dans le dispositif à l'équipement de vérification (52) et de ce dernier à la zone intermédiaire (76),
un équipement de stockage terminal (22) enserrant au moins partiellement une zone de stockage terminal (20) et destiné à la réception d'au moins un contenant de sécurité (24) pour le stockage de documents de valeur (12) provenant de la zone intermédiaire (76),
un boîtier de zone intermédiaire (56) enserrant la zone intermédiaire (76) et comportant une première ouverture (54) à travers laquelle des documents de valeur (12) provenant de l'équipement de vérification (52) sont acheminables à l'équipement de déviation (120), une deuxième ouverture (88) à travers laquelle des documents de valeur (12) sont transportables de l'équipement de déviation (120) à la zone de stockage terminal (20), et un élément de boîtier de zone intermédiaire (86) pouvant être mû en un mouvement de va-et-vient entre une position d'ouverture dans laquelle un accès à l'équipement de déviation (120) est possible pour un opérateur par l'intermédiaire d'une zone d'accès et une position de fermeture dans laquelle il protège la zone intermédiaire (76) contre un accès d'un opérateur par l'intermédiaire d'une zone d'accès au moins pour ce qui est du prélèvement de documents de valeur (12), et
comprenant un équipement de verrouillage (92) destiné à verrouiller l'élément de boîtier de zone intermédiaire (86) dans la position de fermeture,
le dispositif étant en outre réalisé de telle manière que, quand l'élément de boîtier de zone intermédiaire (86) se trouve dans la position de fermeture, l'équipement de déviation (120) est protégé contre un accès d'un opérateur au moins pour ce qui est du prélèvement, par la première ouverture (54), d'un document de valeur (12) y étant stocké.

3. Dispositif selon la revendication 1 ou 2, qui comporte en outre une couverture de zone de traitement (32) comportant un élément de couverture (36) pouvant être mû en un mouvement de va-et-vient entre une position de fermeture dans laquelle la zone de traitement (28) est recouverte par la couverture de zone de traitement (32), et une position d'ouverture dans laquelle un accès à la zone de traitement (28) est possible pour un opérateur.

4. Dispositif selon une des revendications précédentes, dans lequel la première et/ou la deuxième ouverture (54, 88) présente la forme d'une fente d'une largeur de moins de 9 mm.

5. Dispositif selon une des revendications précédentes, dans lequel au moins dans le cas où l'élément de couverture (36) se trouve dans la position d'ouverture et où l'élément de boîtier de zone intermédiaire (86) se trouve dans la position de fermeture, la première ouverture (54) est fermée dans une telle mesure qu'un document de valeur (12) ne peut pas être transporté à travers la première ouverture (54)

6. Dispositif selon une des revendications précédentes, dans lequel au moins un élément dans le boîtier de zone intermédiaire (56) ou dans la zone de traitement (28), un élément du boîtier de zone intermédiaire (56) et/ou le réservoir intermédiaire (16) sont déplaçables relativement à la zone de traitement (28) entre une première position dans laquelle des documents de valeur (12) sont transportables à travers la première ouverture (54) entre le réservoir intermédiaire (16) et la zone de traitement (28), et une deuxième position dans laquelle, au moins dans le cas où l'élément de couverture (36) se trouve dans la position d'ouverture et où l'élément de boîtier de zone intermédiaire (86) se trouve dans la position de fermeture, un transport consistant à acheminer à la zone de traitement (28), à travers la première ouverture (54), un document de valeur (12) provenant du réservoir intermédiaire (16) est empêché.

7. Dispositif selon une des revendications précédentes, qui comporte au moins un équipement de saisie de données d'accès (70) pour la saisie de données d'accès et au moins un équipement de commande d'accès (106) relié par une connexion de signalisation avec l'équipement de saisie de données d'accès (70) pour la vérification de données d'accès saisies quant à leur correspondance avec au moins un critère prédéterminé d'accès et pour la commande de l'équipement de verrouillage (92) en fonction de la vérification.

8. Dispositif selon une des revendications précédentes, dans lequel au moins un autre élément dans le boîtier de zone intermédiaire (56), un autre élément du boîtier de zone intermédiaire (56) et/ou le réservoir intermédiaire (16) est déplaçable en un mouvement de va-et-vient relativement à la zone de stockage terminal (20) entre une première position dans laquelle des documents de valeur (12) sont transportables à travers la deuxième ouverture (88) du réservoir intermédiaire (16) à la zone de stockage terminal (20), et une deuxième position dans laquelle cela n'est pas possible.

9. Dispositif selon une des revendications précédentes, dans lequel au moins une autre ouverture (90) vers la zone de stockage terminal (20) est agencée dans le boîtier de zone intermédiaire (56), de telle sorte que des documents de valeur (12) sont transportables à travers les ouvertures (88, 90) vers la zone de stockage terminal (20) dans au moins deux compartiments d'un contenant de sécurité (24) prédéterminé comprenant au moins deux compartiments ou dans au moins deux contenants de sécurité (24) prédéterminés dans la zone de stockage terminal (20).

10. Dispositif selon une des revendications précédentes, qui comporte un équipement de commande (26) qui saisit et mémorise au moins une propriété de documents de valeur (12) stockés temporairement dans le réservoir intermédiaire (16), propriété reconnue par l'équipement de vérification (52) lors de la vérification, et qui est de préférence conçu pour reconnaître une fin du transport de documents de valeur (12) dans le réservoir intermédiaire (16), et pour déterminer, lors de la reconnaissance d'une fin, une propriété cumulée des documents de valeur (12) stockés dans le réservoir intermédiaire (16), notamment leur valeur.

11. Dispositif selon la revendication 10, qui comprend au moins un actionneur (78) pour le déplacement du au moins un élément dans le boîtier de zone intermédiaire (56) ou du au moins un élément du boîtier intermédiaire ou du réservoir intermédiaire (16), et un équipement de saisie de position pour la saisie d'un déplacement de l'élément de couverture (36) dans la position d'ouverture et/ou de l'atteinte de la position d'ouverture, et dans lequel l' équipement de commande (26) est conçu pour commander l'actionneur (78) de telle manière en fonction de signaux de l'équipement de saisie de position et/ou en fonction de donnés dans l'équipement de saisie de position pour la saisie d'un déplacement, qu'un transport entre le réservoir intermédiaire (16) et la zone de traitement (28) est possible ou non.

12. Dispositif selon la revendication 8 et la revendication 10 ou 11, qui comprend pour la délivrance de documents de valeur (12) un actionneur (78) destiné au déplacement de l'autre élément dans le boîtier de zone intermédiaire (56) et/ou du boîtier de zone intermédiaire (56) et/ou du réservoir intermédiaire (16), et dans lequel l'équipement de commande (26) est conçu pour commander l'actionneur (78) de telle manière que des documents de valeur (12) stockés dans le réservoir intermédiaire (16) sont, en fonction du niveau de remplissage dans le contenant de sécurité (24) et/ou en fonction de données introduites dans l'équipement de commande (26) et /ou conformément à leur propriété mémorisée, transportables dans la zone de stockage terminal (20) à travers une des ouvertures.

13. Dispositif selon une des revendications précédentes, dans lequel le réservoir intermédiaire (16) est retirable du dispositif quand l'élément de boîtier de zone intermédiaire (86) se trouve dans la position d'ouverture, et dans lequel le réservoir intermédiaire (16) comprend de préférence un réservoir à tambour ou un réservoir à enroulement.

14. Dispositif selon la revendication 13, dans lequel le réservoir à tambour ou à enroulement (16) est logé de manière à pouvoir tourner ou pivoter.

15. Dispositif selon une des revendications précédentes, dans lequel un déliasseur (40) pour déliasser des documents de valeur (12) introduits sous forme de pile est agencé sur ou dans une voie de transport (48) déterminée par l'équipement de transport (42), au moins jusqu'au réservoir intermédiaire (16) avant l'équipement de vérification (52).

16. Dispositif selon une des revendications précédentes, dans lequel une voie de transport (48) déterminée par l'équipement de transport (42) mène à la zone intermédiaire (76) de manière non pliée.

17. Dispositif selon une des revendications précédentes, qui comporte un équipement de signalisation (112) pour indiquer le lieu auquel, le long d'une voie de transport (48) menant au réservoir intermédiaire (16), la survenance d'une faute de transport a été reconnue, et qui comporte de préférence au moins deux sources lumineuses agencées le long d'une voie de transport (48), et dans lequel l'équipement de commande (26) est réalisé de telle manière et relié à l'équipement de signalisation (112) de telle sorte que, lors de la reconnaissance du lieu d'une faute, c'est la source lumineuse qui est la plus proche du lieu de la faute qui est mise dans un autre état de fonctionnement.

18. Dispositif selon une des revendications de 10 à 12 ou selon une des revendications de 13 à 17 en relation avec la revendication 10, dans lequel il est prévu dans le boîtier de zone intermédiaire (56) une ouverture de délivrance (54) à travers laquelle des documents de valeur (12) sont délivrables à un compartiment de délivrance duquel ils sont retirables, dans lequel le réservoir intermédiaire (16) est déplaçable et un équipement de déviation (118) est relié avec le réservoir intermédiaire (16), et dans lequel l'équipement de commande (26) est conçu pour déplacer le réservoir intermédiaire (16) de telle manière pour le fonctionnement dans un mode de comptage que des documents de valeur (12) sont transportables à travers la première ouverture (54) dans l'équipement de déviation (118) et à partir de là dans l'ouverture de délivrance (54), et pour déterminer et délivrer la valeur des documents de valeur (12)
délivrés à travers l'ouverture de délivrance (54).

19. Dispositif selon une des revendications précédentes, dans lequel la voie de transport engendrée par l'équipement de transport (42) comporte une filière le long de laquelle des documents de valeur (12) sont transportables dans l'équipement de stockage terminal (22) sans stockage intermédiaire dans le réservoir intermédiaire (16).
